(19) Europäisches Patentamt
European Patent Office
Office européen des brevets

(11) **EP 3 450 083 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(51) Int Cl.:
*B23K 26/06* *(2014.01)*    *B23K 26/38* *(2014.01)*
*G02B 19/00* *(2006.01)*    *G02B 27/09* *(2006.01)*

(21) Anmeldenummer: **17001479.9**

(22) Anmeldetag: **04.09.2017**

(54) **VORRICHTUNG UND VERFAHREN ZUR MATERIALBEARBEITUNG**

DEVICE AND METHOD FOR MATERIAL PROCESSING

DISPOSITIF ET PROCÉDÉ DE TRAITEMENT DE MATÉRIAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.03.2019 Patentblatt 2019/10**

(73) Patentinhaber: **Fraunhofer-Gesellschaft zur Förderung der angewandten Forschung e.V.
80686 München (DE)**

(72) Erfinder:
• **Petring, Dirk**
  **D-52134 Herzogenrath (DE)**
• **Schneider, Frank**
  **D-52074 Aachen (DE)**
• **Stoyanov, Stoyan**
  **D-52078 Aachen (DE)**

(74) Vertreter: **Grimm, Ekkehard
   Edith-Stein-Strasse 22
   63075 Offenbach/Main (DE)**

(56) Entgegenhaltungen:
   **DE-A1-102007 024 700    DE-A1-102014 207 624
   US-A1- 2006 044 981**

EP 3 450 083 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Materialbearbeitung gemäß dem Oberbegriff des Anspruchs 1 sowie ein Verfahren gemäß dem Oberbegriff des Anspruchs 16.

Eine solche Vorrichtung zur Materialbearbeitung weist mindestens eine Strahlquelle elektromagnetischer Strahlung, die Strahlung mit einer definierten Leistungsdichteverteilung emittiert, auf. Die Strahlung der Strahlquelle wird durch eine die Strahlung variabel formende und fokussierende Strahlformungsoptik geführt. Die optische Achse der fokussierten Strahlung, auch als Strahlachse bezeichnet, ist auf eine Bearbeitungszone gerichtet. Weiterhin sind Einrichtungen vorhanden, die die Strahlung im Bereich der sich in der Bearbeitungszone ausbildenden und bewegenden Wechselwirkungsfläche von Strahlung und Material hält. Die emittierte Strahlung weist ein erstes Strahlparameterprodukt (beam parameter product) auf und die Strahlung in der Bearbeitungszone, in der die Strahlung mit dem Material in Wechselwirkung steht, weist ein zweites Strahlparameterprodukt auf.

Eine variable Formung der Strahlung bedeutet hierbei, dass die Strahlung hinsichtlich ihres Strahlparameterproduktes, insbesondere bezüglich ihrer radialen und axialen Leistungsdichteverteilung geformt wird, um die Strahlungswirkung im Werkstück, also beispielsweise entlang bzw. auf einer Schneidfront, in einem Bohrloch oder in einer Schweißkapillare, geeignet einzustellen.

Ein entsprechendes, bekanntes Verfahren zur Materialbearbeitung setzt mindestens eine Strahlquelle elektromagnetischer Strahlung, insbesondere eine Laserstrahlquelle ein, wobei die Strahlquelle die Strahlung, die ein erstes Strahlparameterprodukt (beam parameter product) aufweist, mit einer definierten Leistungsdichteverteilung emittiert und die Strahlung der Strahlquelle variabel durch eine Strahlformungsoptik geformt und fokussiert wird. Wie bereits erwähnt, wird die optische Achse der fokussierten Strahlung, als Strahlachse bezeichnet, auf eine Bearbeitungszone gerichtet, und die Strahlung wird im Bereich der sich in der Bearbeitungszone ausbildenden und bewegenden Wechselwirkungsfläche von Strahlung und Material gehalten. Die Strahlung in der Bearbeitungszone, in der die Strahlung mit dem Material in Wechselwirkung steht, weist ein zweites Strahlparameterprodukt auf.

Unter einer Strahlquelle elektromagnetischer Strahlung fallen insbesondere Laserstrahlquellen, aber auch MASER (kohärente Mikrowellenquellen) oder kohärente, extrem kurzwellige Strahlquellen im extremen ultravioletten oder Röntgen-Wellenlängenbereich.

Das Strahlparameterprodukt, als BPP bezeichnet, wie es vorstehend erwähnt ist, bezieht sich auf die Strahlqualität der Strahlung sowie deren Fokussierbarkeit und ist durch die nachfolgende Formel definiert:

$$BPP = \varphi \cdot r_0 = M^2 \cdot \lambda / \pi$$

mit

$\varphi$ = halber Öffnungswinkel der Strahlung im Fernfeld
$r_0$ = Radius des Strahls an seiner Taille
$M^2$ = Beugungsmaßzahl
$\lambda$ = Wellenlänge des Strahls

Der Radius des Strahls an seiner Taille entspricht dem halben Fokuspunkt-Durchmesser. Die Fokussierbarkeit des Strahls verschlechtert sich mit zunehmender Beugungsmaßzahl $M^2$; die Beugungsmaßzahl ist immer größer-gleich 1.

Die Vorrichtungen kommen überall dort vorteilhaft zum Einsatz, wo die Strahlung mindestens einer Strahlquelle eingesetzt wird, um Materialien bzw. Werkstoffe zu bearbeiten, und wo die Wechselwirkung der Strahlung mit dem Material durch die dreidimensionale Ausdehnung und Verteilung der Strahl-Leistungsdichte, auch als Strahlverteilung bezeichnet, beeinflusst wird. Bearbeitungsverfahren, bei denen diese Eigenschaften der Strahlung eine besondere Bedeutung haben, sind solche, bei denen durch die Strahl-Material-Wechselwirkung eine Wechselwirkungsfläche in das Material eindringt. Hierzu zählen beispielsweise das Schneiden, Abtragen, Bohren, Ritzen, Perforieren und Tiefschweißen. Je nach anzuwendendem Verfahren und dessen angestrebten Eigenschaften soll die dreidimensionale Ausdehnung und Verteilung der Strahl-Leistungsdichte und gegebenenfalls auch die Verteilung der lokalen Richtung der Poynting-Vektoren, die die Dichte und die Richtung des Energietransports, d. h. die Leistungsdichte, eines elektromagnetischen Felds angeben, geeignet eingestellt werden.

Im Stand der Technik sind unterschiedliche Vorrichtungen und Verfahren zur Materialbearbeitung mit Laserstrahlung bekannt, bei denen die Eigenschaften der Laserstrahlverteilung einstellbar sind.

Die EP 0 723 834 A1 beschreibt ein Lasersystem, bei dem ein fokussierter Laserstrahl mit variablem Durchmesser in einer festgelegten Fokusebene erzeugt wird. Es werden insbesondere Zoomoptiken zur Anpassung des Strahldurchmessers im Wechselwirkungsbereich durch Änderung des Abbildungsverhältnisses eingesetzt.

Im Stand der Technik sind auch Faseroptiken zur Anpassung der Strahlqualität (Fokussierbarkeit) und/oder des Strahlprofils durch Einkoppeln des originalen Laserstrahls auf kombinierte Kern-Ring-Fasern oder durch Manipulation der Strahleinkoppelposition und Strahlrichtung am Fasereintritt der anpassenden Faser zur Änderung der Strahldivergenz und -verteilung am Faseraustritt bekannt.

Die DE10 2007 024 700 A1 beschreibt ein Verfahren sowie eine Vorrichtung zur Materialbearbeitung mit Laserstrahlung, bei dem die Fokussierung der Laserstrahlung derart erfolgt, dass Anteile der Laserstrahlung nicht nur in Ausbreitungsrichtung nach der Strahltaille, sondern auch in der Strahltaille und/oder auch in Ausbreitungsrichtung vor der Strahltaille weg gerichtet werden und dass diese Anteile und die Divergenzwinkel größer als diejenigen der Auswirkungen von Abbildungsfehlern sind, die mit Standardoptiken unbeabsichtigt entstehen und in Kauf genommen werden. Es werden auch Axikons zur Erzeugung von ringförmigen Strahlprofilen durch konische Flächenanteile der Strahlformungsoptik und Beugungsoptiken zur Anpassung der Strahlverteilung durch Beeinflussung der Wellenfront angegeben.

Die DE 10 2015 101 263 A1 beschreibt eine Vorrichtung zur Materialbearbeitung mittels Laserstrahlung, bei der eine Einstelloptik zur Fokussierung der Laserstrahlung, um die Intensitätsverteilung (Leistungsdichteverteilung) einzustellen, zumindest zwei plattenförmige, optische Elemente aufweist, die hintereinander im Strahlengang des Laserstrahls angeordnet sind und die gegeneinander in Umfangsrichtung verdrehbar sind.

Die EP 2 334 465 B1, die die Basis für den Oberbegriff der Ansprüche 1 und 16 bildet, betrifft ein Verfahren zum Laserstrahlschneiden eines Werkstücks, bei dem der Qualitätsfaktor (BPP) des auf das Werkstück einfallenden Laserstrahls mit Hilfe einer optischen Vorrichtung angepasst oder modifiziert wird. Hierdurch soll ein fokussierter Laserstrahl erhalten werden, der ein modifiziertes Strahlparameterprodukt (beam parameter product - BPP) aufweist, das sich von dem BPP des einfallenden Laserstrahls unterscheiden soll. Die entsprechende Vorrichtung hierfür umfasst mindestens ein transmissives oder reflektierendes, diffraktives, optisches Element, wobei sich das modifizierte BPP des fokussierten Laserstrahls von dem BPP des einfallenden Laserstrahls um einen Multiplikationsfaktor größer oder gleich 1,2 oder kleiner oder gleich 5 unterscheidet. Die Oberfläche der optischen Vorrichtung weist Mikrostrukturen auf, die in das Substrat der optischen Vorrichtung in verschiedenen Tiefen in der Größenordnung der Arbeitswellenlängen eingraviert sind. Folglich werden Beugungsoptiken zur Anpassung der Strahlverteilung durch Beeinflussung der Wellenfront beschrieben.

Die WO 2016/209800 A1 beschreibt ein Lasersystem, das die Strahlung auf ein zu bearbeitendes Werkstück fokussiert und die räumliche Energieverteilung auf dem Werkstück verändert. Hierzu werden bewegbare Optiken eingesetzt, die eine Kollimationslinse, eine Fokussierlinse, ein System zum Ändern der Position des optischen Elements innerhalb des Strahlungswegs sowie eine Steuereinheit zum Steuern dieses Systems aufweisen. Die bewegte Optik ist vor der Kollimierungsoptik zur Beeinflussung der räumlichen Leistungsverteilung angeordnet.

Die US 020150378184 A1 beschreibt ein Strahlparameter-Einstellungssystem und Fokussiersystem, um die räumliche Leistungsverteilung eines Strahls von einer Strahlquelle zu ändern und die Strahlung mit einer geänderten räumlichen Leistungsverteilung auf ein Werkstück zu fokussieren. Es wird ein thermo-optisches Element zum Aufnehmen der Strahlung und Weiterleiten der Strahlung auf das Werkstück eingesetzt, wobei das thermo-optische Element durch eine Wärmequelle beheizt wird, um Brechungsindizes zu ändern. Das thermo-optische Element und die Wärmequelle werden durch eine Steuereinheit gesteuert, um eine geforderte räumliche Leistungsverteilung an dem Werkstück zu erreichen.

Die wesentlichen Nachteile, die der Stand der Technik mit sich bringt, können wie folgt zusammengefasst werden:

Die eingesetzten Zoomoptiken beeinflussen maßgeblich nur das Abbildungsverhältnis (und damit die F-Zahl definiert als Verhältnis von Brennweite (f) zu Durchmesser (D) der wirksamen Eintrittspupille) und damit die Spotgröße auf oder in dem Werkstück, nicht aber die Strahlqualität und/oder das Strahlprofil.

Faseroptiken (oder Waveguides) sind an ihrem Ein- und Ausgang wegen der hohen Leistungsdichten der eingesetzten Strahlung an den jeweiligen Endflächen sehr empfindlich und benötigen teure, hochpräzise einstellbare Koppeloptiken und lassen nur eine eingeschränkte, teilweise auch nur diskrete, Variabilität der Strahlformung zu.

Axikons, d.h. spezielle, konisch geschliffene Linsen oder Spiegel, die kreisrunde Strahlung in einen Ring transformieren, ebenso wie sogenannte Siemenssternoptiken, die aus radialen, in Umfangsrichtung Zick-Zack-förmig verlaufenden Facetten aufgebaut sind und dadurch ebenfalls eine ringförmige, jedoch entlang des Ringumfangs unterbrochene Strahlungsumverteilung bewirken, sind sehr aufwändig in Bezug auf den Herstellungsprozess, insbesondere in Bezug auf Formfertigung, Politur und Beschichtung, und sind sehr justierempfindlich.

Variable Beugungsoptiken, wie sie im Stand der Technik eingesetzt werden, lassen nur im niedrigen Leistungsbereich eine variable Strahlformung bzw. räumliche Strahlungsmodulation (Spatial Light Modulator) zu, da die heute verfügbaren Halbleiterelemente, mit denen die Phasenverschiebung lokal veränderbar ist, zu hohe thermische Verluste erzeugen, die bei höheren Leistungsdichten zu Fehlfunktionen bis hin zur Zerstörung der empfindlichen Optiken führen. Das Dokument, das vorstehend erwähnt ist, beschränkt sich sogar nur auf "geritzte", also fixe unvariable diffraktive Optiken, deren Leistungsbelastbarkeit ebenfalls sehr eingeschränkt ist und die, wie alle Beugungsoptiken, ebenfalls systemimmanente Beugungsverluste verursachen.

Zusatzoptiken zur Standardoptik, die aus Kollimierungs- und Fokussierungsoptik besteht, wobei die Zusatzoptik vor der Kollimierungsoptik angeordnet wird, vergrößern das optische Gesamtsystem und die Anzahl der optischen Elemente unnötig. Außerdem wird durch die von der Standardkonfiguration vorgegebenen Randbedingungen der mit vertretbarem Aufwand erzeugbare Variationsbereich der Strahlformung unnötig eingeschränkt.

Thermo-optische Elemente, wie sie nach dem Stand der Technik eingesetzt werden, lassen nur eine träge und vergleichsweise ungenaue Variation der Strahlverteilung zu.

Stufenweise, diskret bewegte Optiken beispielsweise in Form von Revolveroptiken oder auf unterschiedliche Fasern schaltende Optiken, die lediglich zwischen diskreten optischen Zuständen schalten, sind damit hinsichtlich ihrer Variabilität deutlich eingeschränkt.

Der vorliegenden Erfindung liegt die Aufgabe zugrunde, die vorstehend anhand des Stands der Technik aufgeführten Nachteile zumindest teilweise zu beseitigen. Insbesondere soll eine Vorrichtung angegeben werden, die eine prozessoptimierte, dreidimensionale Absorptionsfläche ausgehend von der Oberfläche des Werkstücks bis in oder durch das Werkstück ausbildet.

Gelöst wird die Aufgabe durch eine Vorrichtung mit den Merkmalen des Anspruchs 1. Verfahrensgemäß wird die Aufgabe durch ein Verfahren durch die Merkmale des Anspruchs 16 gelöst. Bevorzugte Weiterbildungen der Vorrichtung und des Verfahrens sind in den jeweiligen abhängigen Ansprüchen angegeben.

Die erfindungsgemäße Vorrichtung, die die eingangs beschriebenen Merkmale aufweist, ist dadurch gekennzeichnet, dass eine Stelleinrichtung vorgesehen ist, die das zweite Strahlparameterprodukt durch Änderung der Position oder der optischen Eigenschaften mindestens eines optischen Elements variiert. Die Strahlformungsoptik weist mindestens ein erstes optisches Element und ein zweites optisches Element auf. Das mindestens eine erste optische Element erzeugt den Betrag einer Aberration und/oder vergrößert den Betrag einer Aberration, während das mindestens eine zweite optische Element der Strahlformungsoptik die betragsmäßig erzeugte oder vergrößerte Aberration durch die Einstellung der Stelleinrichtung durch Änderung der Position oder der optischen Eigenschaften mindestens des ersten oder des zweiten optischen Elements so verändert, dass die Strahlung in der Bearbeitungszone das einzustellende zweite Strahlparameterprodukt aufweist.

Das erfindungsgemäße Verfahren zeichnet sich dadurch aus, dass das zweite Strahlparameterprodukt durch Änderung der Position oder der optischen Eigenschaften mindestens eines optischen Elements variiert wird. Darüber hinaus wird mit dem mindestens einen ersten optischen Element der Strahlformungsoptik der Betrag einer Aberration erzeugt oder vergrößert und mit mindestens einem zweiten optischen Element der Strahlformungsoptik wird die betragsmäßig erzeugte oder vergrößerte Aberration durch die Einstellung der Stelleinrichtung dadurch verändert, dass die Position oder die optischen Eigenschaften mindestens des ersten oder des zweiten optischen Elements derart geändert wird, dass die Strahlung in der Bearbeitungszone das einzustellende zweite Strahlparameterprodukt aufweist.

Mit einer solchen Vorrichtung sowie einem Verfahren gemäß der Erfindung wird erreicht, dass zur Strahlformung auf empfindliche Faser- und Beugungsoptiken verzichtet werden kann, eine kontinuierliche Veränderung der Strahlqualität und damit auch der Strahlverteilung mit hoher Variabilität möglich ist und auch preisgünstig herstellbare Optiken aus hochwertigen Substraten und mit guten Beschichtungsmerkmalen verwendet werden können.

Bevorzugt wird die Vorrichtung so ausgelegt, dass das mindestens eine erste optische Element der Strahlformungsoptik den Betrag einer negativen Aberration erzeugt oder vergrößert und das mindestens eine zweite optische Element der Strahlformungsoptik die betragsmäßig erzeugte oder vergrößerte negative Aberration so verändert, dass die Strahlung in der Bearbeitungszone das einzustellende zweite Strahlparameterprodukt aufweist. Hierzu wird über die Einstellung der Stelleinrichtung eine Änderung der Position oder der optischen Eigenschaften mindestens des ersten oder des zweiten optischen Elements vorgenommen. Mit diesen Maßnahmen wird erreicht, dass unter Nutzung handelsüblicher Optikprogramme unter Vorgabe der gewünschten Strahleigenschaften nur wenige optische Elemente rechnerisch optimiert werden müssen.

In einer weiteren Ausgestaltung der Vorrichtung unterschreitet das mit der Stelleinrichtung minimal einstellbare zweite Strahlparameterprodukt nicht den Wert des ersten Strahlparameterprodukts. Vorzugweise soll das minimal einstellbare zweite Strahlparameterprodukt identisch oder nur wenig größer als das erste Strahlparameterprodukt sein, damit auch die hohe Strahlqualität zur Erzielung kleiner Spotdurchmesser und hoher Leistungsdichten nutzbar bleibt. Weiterhin sollte das mit der Stelleinrichtung maximal einstellbare zweite Strahlparameterprodukt mindestens das Doppelte, vorzugsweise das 5- bis 20-fache, des mit der Stelleinrichtung minimal einstellbaren zweiten Strahlparameterprodukts betragen. Durch diese Unterschiede zwischen dem ersten und dem zweiten Strahlparameterprodukt kann beispielsweise das typische Anwendungsspektrum von Hochleistungslaser-Schneidanlagen vollständig abgedeckt werden.

Damit bereits in einer Anlage gegebenenfalls vorhandene Strahlkollimationsoptiken weiter verwendet werden können, wird die entsprechend auf koiiimierte Eintrittsstrahlung ausgelegte Strahlformungsoptik, in Propagationsrichtung der Strahlung gesehen, ausgangsseitig einer Strahlkollimationsoptik angeordnet.

Die erfindungsgemäße Vorrichtung kann insbesondere auch dann eingesetzt werden, wenn die in die Strahlformungsoptik mit dem ersten Strahlparameterprodukt eintretende Strahlung eine nicht kollimierte Strahlung ist. Hierdurch wird eine Kollimationsoptik überflüssig, ohne dass sich der technische Aufwand zur Dimensionierung der optischen Elemente der Strahlformungsoptik nennenswert erhöht. Der Aufwand kann sogar geringer sein, da mit der erfindungsgemäßen Vorrichtung prinzipiell auf eine übliche Parallelisierung der Strahlung verzichtet werden kann.

Für eine technisch sinnvolle Einstellung des erforderlichen bzw. zulässigen Arbeitsabstandes der Strahlformungsoptik auf einen vom Anwender gewünschten Bereich oder zur Vermeidung von hinsichtlich Länge und Dynamik zu aufwändigen Zusatzachsen wird bei einer Variation des zweiten Strahlparameterprodukts ein Taillenabstand einer Strahltaille der fokussierten Strahlung zu einer festen Referenzebene der Strahlformungsoptik konstant eingestellt oder in fest vorgegebenen Schranken variiert. Die Schranken werden unter Berücksichtigung von gewünschten Arbeitsabständen, Taillenpositionen im Bearbeitungsraum oder im Werkstück oder von den gestatteten Systemabmessungen festgelegt und entsprechend eingestellt.

Bei einer Variation des zweiten Strahlparameterprodukts bei einem variierenden Taillenabstand der Strahltaille der fokussierten Strahlung zu einer festen Referenzebene der Strahlformungsoptik variiert der Taillenabstand dadurch in vorgegebenen Schranken, indem mindestens das erste und das zweite optische Element so ausgelegt sind, dass wenigstens bei Änderung der Position oder der optischen Eigenschaften mindestens eines des ersten oder des zweiten optischen Elements der Taillenabstand innerhalb der vorgegebenen Schranken verbleibt.

Der Strahlformungsoptik kann ein drittes optisches Element zugeordnet werden, das in seiner Position oder seinen optischen Eigenschaften änderbar ist, um den Taillenabstand in den vorgegebenen Schranken variabel einzustellen oder konstant zu halten. Für eine variable Einstellung, ebenso für eine konstante Einstellung, des Taillenabstands wird das dritte optische Element positioniert.

Das mindestens eine erste und/oder das mindestens eine zweite optische Element, oder auch ein weiteres optisches Element, der Strahlformungsoptik kann sphärische Flächen haben, wodurch die Herstellungskosten deutlich sinken.

Falls sphärische Aberrationen für die gewünschte Optikauslegung keinen ausreichenden Variationsbereich oder zu großen Systemaufwand beispielsweise bezüglich der Größe und Anzahl der optischen Komponenten, aus denen die optischen Elemente aufgebaut werden müssen, erfordern, kann das mindestens eine erste und/oder das mindestens eine zweite optische Element, oder auch ein weiteres optisches Element, der Strahlformungsoptik mit asphärischen Flächen versehen werden.

Die optischen Eigenschaften des mindestens einen ersten optischen Elements und/oder des mindestens einen zweiten optischen Elements, oder auch eines weiteren optischen Elements, können durch Änderung deren/dessen Brechungsindex, deren/dessen Brechungsindexgradienten oder deren/dessen Form, d.h. der Form der Oberfläche(n) der optischen Elemente, variiert werden. Es ist vorteilhaft, jeweils die Variationsmethode zu verwenden, die die gewünschte Variation des Strahlparameterproduktes am besten und am kostengünstigsten ermöglicht. So sind für den niedrigen Leistungsbereich unter 100 Watt Optiken mit variablem Brechungsindex oder Brechungsindexgradienten auf Basis von Halbleitermaterialien oder Flüssigkeiten (sogenannte Flüssiglinsen) einsetzbar, während für hohe Leistungen im Bereich über 5 kW Spiegeloptiken mit über Piezzo-Antriebe oder über variierenden Druck eines internen Mediums (Wasser, Luft, Öl) verformbarer, die Strahlung reflektierender Membran vorteilhaft sein können.

Eine negative optische Brennweite in Bezug auf das mindestens eine erste optische Element oder das mindestens eine zweite optische Element, oder auch in Bezug auf ein weiteres optisches Element, führt dazu, dass die Strahlung aufgeweitet wird und im Zusammenspiel mit positiven optischen Elementen wegen der dann leichter veränderbaren Phasenverschiebungen der Wellenfront der Strahlung Aberrationen effizienter erzeugt und verändert werden können.

Durch ein Steuerungsmodul der Stelleinrichtung kann das zweite Strahlparameterprodukt in Abhängigkeit eines geforderten Bearbeitungsergebnisses oder mindestens eines eingestellten oder sich einstellenden Prozessparameters entsprechend mindestens einer vorbestimmten Kennlinie oder mindestens eines vorbestimmten Kennlinienfelds eingestellt werden, auf die zurückgegriffen wird. Die einfachste Kennlinie gibt an, bei welcher Einstellung eines optischen Elementes welches Strahlparameterprodukt erzeugt wird. Sind weitere Einstellungen, beispielsweise eine zusätzliche Verstellung eines zweiten optischen Elementes, erforderlich, liegt bereits ein Kennlinienfeld vor. Es hat sich als vorteilhaft erwiesen, mit zwei Stellgrößen, beispielsweise den Positionen eines ersten und zweiten optischen Elementes (wobei die Nummerierung nichts über die Reihenfolge der optischen Elemente aussagt) das Strahlparameterprodukt entsprechend den Anforderungen des Bearbeitungsprozesses, beispielsweise der zu schneidenden Blechdicke, oder mindestens eines eingestellten oder sich einstellenden Prozessparameters, beispielsweise der Strahlleistung, der Bearbeitungsgeschwindigkeit oder der Prozesstemperatur, einzustellen. Die Abhängigkeit des geeigneten Strahlparameterprodukts kann auf Basis von Erfahrungswissen, von Versuchsreihen oder von Prozesssimulationen erfolgen und als Trajektorien in dem oben genannten Kennlinienfeld abgelegt werden.

Die DE 10 2014 207 624 A1 beschreibt eine Vorrichtung und ein Verfahren zur Materialbearbeitung. Die Vorrichtung umfasst ein Faserlasersystem mit einem Laserstrahlausgang und umfasst weiterhin ein Zoom-Optiksystem, das in Strahlrichtung des Laserstrahls des Faserlasersystems zwischen dem Laserstrahlausgang, zum Beispiel einem Faserende, und einem Materialbearbeitungsbereich, zum Beispiel einer Arbeitsfläche, angeordnet ist.

Auch kann das Steuerungsmodul der Stelleinrichtung das zweite Strahlparameterprodukt abhängig von der Bearbeitungszeit, d. h. zeitabhängig, und/oder abhängig von der Bearbeitungsposition, d. h. ortsabhängig, entsprechend einer vorbestimmten Kennlinie oder eines vorbestimmten Kennlinienfeldes verändert werden. In diesem Fall werden im Steuerungsmodul zusätzlich Zeitabhängigkeiten (beispielsweise Rampen- oder Modulationsfunktionen) und/oder Ortsabhängigkeiten (beispielsweise je nach Krümmungsradius am Ort der aktuellen Bearbeitungstrajektorie) des einzustellenden Strahlparameterproduktes und gegebenenfalls auch der F-Zahl in Kennlinien bzw. Kennlinienfeldern abgelegt, für die wiederum entsprechende Trajektorien für die Stellgrößen der Stelleinrichtung abgelegt sind.

In einer weiteren Ausgestaltung wird bei Änderung der Position oder der optischen Eigenschaften mindestens eines des ersten oder des zweiten optischen Elements entlang einer vorbestimmten Kennlinie oder in einem vorbestimmten Kennlinienfeld der Taillenabstand innerhalb der vorgegebenen Schranken belassen oder definiert eingestellt. Entsprechende Randbedingungen werden bei der rechnerischen Auslegung und Optimierung der Eigenschaften und Positionen der optischen Elemente mit handelsüblichen Optikprogrammen durch entsprechenden Einträge für die sogenannte "merit function" (Bewertungsfunktion) berücksichtigt.

Das Steuerungsmodul der Stelleinrichtung kann das zweite Strahlparameterprodukt auch in Abhängigkeit von mindestens einem der folgenden Kriterien, nämlich von dem zu bearbeitenden Werkstoff, von dem durchzuführenden Bearbeitungsprozess, von der zu bearbeitenden Geometrie, von der geforderten Qualität, von den eingestellten oder sich einstellenden Prozessparametern, wie Bearbeitungsgeschwindigkeit, Strahlleistung, Prozessgasart, Prozessgasdruck, Taillenposition, oder von mindestens einem Sensorsignal, das von Eigenschaften der Bearbeitungszone abhängig ist, entsprechend mindestens einer vorbestimmten Kennlinie oder mindestens eines vorbestimmten Kennlinienfelds vor oder während der Bearbeitung in einer offenen oder geschlossenen Regelschleife verändern.

Verfahrensgemäß wird mit dem mindestens einen ersten optischen Element der Betrag einer (in einer weiteren Ausgestaltung negativen) Aberration erzeugt oder vergrößert und wird mit dem mindestens einen zweiten optischen Element die betragsmäßig erzeugte oder vergrößerte (in einer weiteren Ausgestaltung negative) Aberration durch Änderung der Position oder der optischen Eigenschaften mindestens des ersten oder zweiten optischen Elements so verändert, dass die Strahlung in der Bearbeitungszone das einzustellende zweite Strahlparameterprodukt aufweist.

Bevorzugt werden Leistungsdichteverteilungen der fokussierten Strahlung in Ebenen senkrecht zur optischen Achse, die bei Anwendung der fokussierten Strahlung die Bearbeitungszone durchdringen oder schneiden, bei freier Propagation, ohne ein Material (Werkstück) im Strahlengang, jeweils durch einen nach der zweiten Momenten-Methode definierten ersten Radius r1 definiert und weisen jeweils einen zweiten Radius r2 auf. Innerhalb eines Kreises mit dem zweiten Radius r2 sind mindestens 90 %, vorzugsweise 95 %, und noch bevorzugter zwischen 99 % und 100 %, der Laserstrahlleistung eingeschlossen, wobei der zweite Radius r2 auf maximal den 1,5-fachen Wert und bevorzugt zwischen dem 1,1-fachen und dem 1,3-fachen Wert des ersten Radius r1 eingestellt wird.

Es ist auch vorgesehen, dass Leistungsdichteverteilungen der fokussierten Strahlung, in Ebenen senkrecht zur optischen Achse, die bei Anwendung der fokussierten Strahlung die Bearbeitungszone durchdringen oder schneiden, bei freier Propagation, ohne ein Material (Werkstück) im Strahlengang, jeweils durch eine maximale Leistungsdichte definiert werden, die kleiner als der 5-fache Wert, vorzugweise kleiner als der 2-fache bis 3-fache Wert, der mittleren Leistungsdichte in der jeweiligen Ebene senkrecht zur Strahlachse auf derjenigen Fläche ist, die von einem Kreis mit dem nach der zweiten Momenten-Methode definierten Radius r1 eingeschlossen ist.

Es hat sich gezeigt, dass es je nach minimal verfügbarem Strahlparameterprodukt der Strahlquelle vorteilhaft ist, ab einer bestimmten Bearbeitungstiefe das Strahlparameterprodukt mit zunehmender Bearbeitungstiefe zu vergrößern, um ein gleichmäßigeres, qualitativ hochwertigeres Bearbeitungsergebnis zu erzielen. Unter Bearbeitungstiefe ist hier beispielsweise eine zu schneidende Materialdicke, eine geforderte Einschweißtiefe für eine Metallverbindung oder die Solltiefe einer Laserbohrung zu verstehen. Unterhalb der oben genannten, bestimmten Bearbeitungstiefe wäre eine Erhöhung des Strahlparameterprodukts über das minimal verfügbare Strahlparameterprodukt hinaus nachteilig, da beispielsweise die möglichen Bearbeitungsgeschwindigkeiten sinken würden. Daher wird durch ein Steuerungsmodul einer Stelleinrichtung das zweite Strahlparameterprodukt in Abhängigkeit einer geforderten Bearbeitungstiefe entsprechend mindestens einer vorbestimmten Kennlinie oder mindestens eines vorbestimmten Kennlinienfelds ab oder oberhalb einer vorbestimmten Bearbeitungsgrenztiefe mit zunehmender, geforderter Bearbeitungstiefe sukzessive vergrößert. Eine sukzessive Vergrößerung kann hier bedeuten, dass eine Vergrößerung des zweiten Strahlparameterprodukts als Funktion der Bearbeitungstiefe in diskreten Schritten (Stufenfunktion) oder auch kontinuierlich (stetige Funktion) erfolgt.

Über das Steuerungsmodul der Stelleinrichtung kann bei einer Variation des zweiten Strahlparameterprodukts auch die F-Zahl der fokussierten Strahlung anhand mindestens einer vorbestimmten Kennlinie oder mindestens eines vorbestimmten Kennlinienfelds eingestellt werden. Es hat sich als vorteilhaft erwiesen, mit zwei Stellgrößen, beispielsweise den Positionen eines ersten und zweiten optischen Elementes (wobei die Nummerierung nichts über die Reihenfolge der optischen Elemente aussagt), sowohl das Strahlparameterprodukt als auch die F-Zahl entsprechend den Anforderungen des Bearbeitungsprozesses, beispielsweise der zu schneidenden Blechdicke, oder mindestens eines eingestellten oder sich einstellenden Prozessparameters, beispielsweise der Strahlleistung, der Bearbeitungsgeschwindigkeit oder der Prozesstemperatur, einzustellen. Die Abhängigkeit des geeigneten Strahlparameterprodukts und der geeigneten F-Zahl von den oben genannten Anforderungen kann auf Basis von Erfahrungswissen, von Versuchsreihen oder von Prozesssimulationen erfolgen und in - dem Kennlinienfeld, das die Abhängigkeit des Strahlparameterprodukts und der F-Zahl von den Stellgrößen der Stelleinrichtung beschreibt, übergeordneten - Kennlinienfeldern abgelegt werden. Darüber hinaus kann die F-Zahl der fokussierten Strahlung anhand der vorbestimmten Kennlinie oder des vorbestimmten Kennlinienfelds so eingestellt werden, dass mit größerem zweiten Strahlparameterprodukt die F-Zahl konstant bleibt oder vergrößert wird.

Es ist darauf hinzuweisen, dass sich der Erfindungsgegenstand nicht nur auf rotationssymmetrische Eingangs- oder Ausgangs-Strahlverteilungen mit rotationssymmetrisch wirkenden Optiken beschränkt, sondern in gleicher Weise auch Strahlverteilungen anderer Symmetrie oder auf unsymmetrische Strahlverteilungen sowie Optiken anderer Symmetrie, wie beispielsweise nur in einer Achse sphärisch oder asphärisch gekrümmte Zylinderlinsen, zur Anwendung in der erfindungsgemäßen Vorrichtung oder dem Verfahren genutzt werden können. Dabei können die erfindungsgemäßen Merkmale auch bevorzugt nur auf eine Sagittalebene der Strahlung angewandt werden.

Weitere Einzelheiten und Merkmale der Erfindung ergeben sich aus der nachfolgenden Beschreibung von Ausführungsbeispielen anhand der Zeichnung. In der Zeichnung zeigt

| Figur 1 | eine schematische Darstellung einer erfindungsgemäßen Vorrichtung gemäß einer ersten Ausführungsform, |
|---|---|
| Figur 2 | eine schematische Darstellung einer erfindungsgemäßen Vorrichtung gemäß einer zweiten Ausführungsform, |
| Figur 3 | eine schematische Darstellung einer erfindungsgemäßen Vorrichtung gemäß einer weiteren, dritten Ausführungsform, |
| Figur 4 | eine schematische Darstellung einer erfindungsgemäßen Vorrichtung gemäß einer vierten Ausführungsform, |
| Figur 5 | eine Grafik, die die relative Änderung des Stahlparameterprodukts (BPP2) und der F-Zahl in Abhängigkeit der Position des ersten optischen Elements darstellt, |
| Figur 6 | eine Grafik, die die relative Änderung des Radius der Stahltaille, des Strahlparameterprodukts (BPP2) und der F-Zahl in Abhängigkeit der Position des ersten und des zweiten optischen Elements sowie eine Einstellungstrajektorie und die Wachstumsrichtung von Strahltaillenradius ($r_F$), Strahlparameterprodukt (BPP2) und F-Zahl darstellt, |
| Figur 7 | drei Grafiken A, B und C, die sich auf Leistungsdichteverteilungen der fokussierten Strahlung als Funktion der Strahlradiuskoordinate mit Bezug auf einen ersten Radius r1 und einen zweiten Radius r2, definiert nach der zweiten Momenten-Methode, beziehen, wobei die Grafik A einen Strahlquerschnitt zeigt mit Rasterungen, deren Dichte den Leistungsdichteangaben und den entsprechenden Leistungsdichten 0 bis $I_{max}$ der Leistungsdichteskala zugeordnet sind, die Grafik B die Leistungsdichte abhängig von der Strahlradiuskoordinate mit Kennzeichnung des Strahlradius r1 und des Strahlradius r2 darstellt, und die Grafik C den Anteil der eingeschlossenen Energie abhängig von der Strahlradiuskoordinate und speziell für den Strahlradius r1 und den Strahlradius r2 zeigt, und |
| Figuren 8A und 8B | jeweils eine reale Strahlvermessung des Strahlprofils bei jeweils einer Einstellung der Strahlformungsoptik für BBP$_{min}$ und BPP$_{max}$, wobei auf der linken Seite die rekonstruierten Strahlkaustiken entlang der Strahlachse gezeigt sind und auf der rechten Seite jeweils zwei Strahlquerschnitte auf zwei charakteristischen Messpositionen mit Rasterungen dargestellt sind, deren Dichte die Leistungsdichten angeben und den entsprechenden Leistungsdichten 0 bis $I_{max}$ der Leistungsdichteskala zugeordnet sind. |

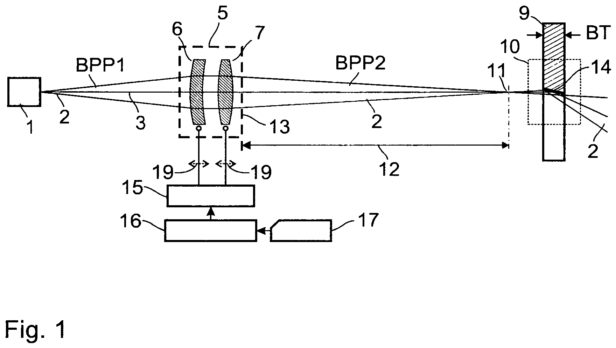

Die erfindungsgemäße Vorrichtung, wie sie in Figur 1 gemäß einer ersten Ausführungsform dargestellt ist, umfasst eine Strahlquelle 1, die elektromagnetische Strahlung 2 abgibt, deren Strahlachse mit dem Bezugszeichen 3 bezeichnet ist. Die Strahlung 2 besitzt eine definierte Leistungsdichteverteilung mit einem ersten Strahlparameterprodukt (beam parameter product) BPP1. Die divergente Strahlung 2 der Strahlquelle 1 tritt in eine Strahlformungsoptik 5 als nicht kollimierte Strahlung ein.

Die Strahlformungsoptik 5 dient dazu, die Strahlung 2 variabel zu formen und zu fokussieren und besitzt mindestens ein erstes optisches Element 6 und mindestens ein zweites optisches Element 7. Das erste optische Element 6 dieser Strahlformungsoptik 5 ist in dem gezeigten Beispiel eine Meniskuslinse, während das zweite optische Element 7 der Strahlformungsoptik 5, das, in Richtung der Strahlung 2 gesehen, hinter dem ersten optischen Element 6 positioniert ist, eine bikonvexe Sammellinse ist.

Somit weisen in der ersten Ausführungsform der Figur 1 das eine erste optische Element 6 und das eine zweite optische Element 7 der Strahlformungsoptik 5 sphärische Flächen auf. Optische Elemente 6 oder 7 mit sphärischen Flächen haben den Vorteil, dass sie deutlich geringere Herstellungskosten aufweisen, im Gegensatz zu optischen Elementen 6 oder 7, die mit asphärischen Flächen versehen sind bzw. deren Brechungsindex oder Form variabel änderbar und einstellbar ist.

Das mindestens eine erste optische Element 6 erzeugt und/oder vergrößert den Betrag einer Aberration, während das mindestens eine zweite optische Element 7 der Strahlformungsoptik 5 die betragsmäßig erzeugte oder vergrößerte Aberration verändert, indem die Position mindestens des ersten optischen Elements 6 oder des zweiten optischen Elements 7 verändert wird, so dass die aus der Strahlformungsoptik 5 austretende Strahlung 2, die in Richtung eines zu bearbeitenden Werkstücks 9 fokussiert wird, ein zweites Strahlparameterprodukt (beam parameter product) BPP2 besitzt.

Die aus der Strahlformungsoptik 5 bzw. dem zweiten optischen Element 7 austretende, fokussierte Strahlung 2 weist eine Strahltaille 11 auf. Ein Taillenabstand 12 ist zwischen der Strahltaille 11 und einer festen Referenzebene 13 der Strahlformungsoptik 5 festgelegt. Die Referenzebene 13 ist eine Ebene der Strahlformungsoptik senkrecht zu der Strahlachse 3, die für eine Messung des Taillenabstands 12 geeignet ist, und kann beliebig, aber fest definiert werden.

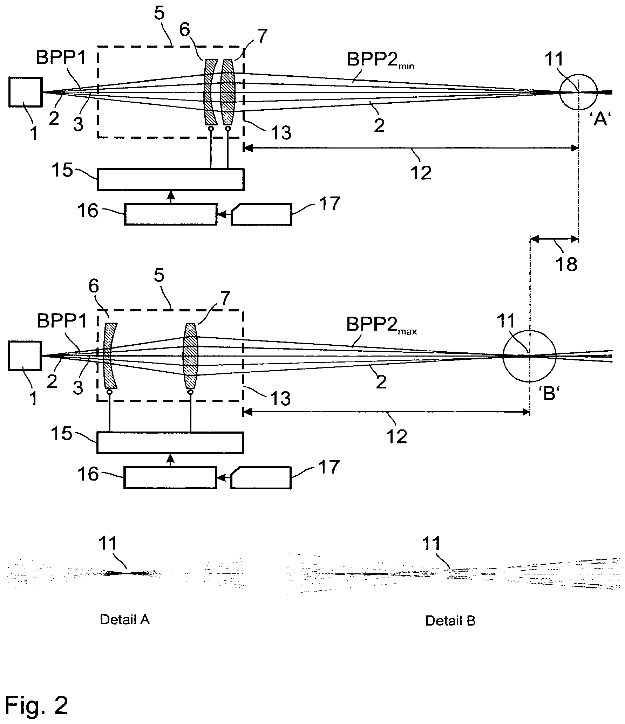

Das mindestens eine erste optische Element 6 der Strahlformungsoptik 5 kann den Betrag einer (in Figur 2 im Detail B dargestellten) negativen Aberration erzeugen oder vergrößern und das mindestens eine zweite optische Element 7 der Strahlformungsoptik 5 kann dann die betragsmäßig erzeugte oder vergrößerte negative Aberration durch die Einstellung der Stelleinrichtung 15 durch Änderung der Position mindestens des ersten optischen Elements 6 oder des zweiten optischen Elements 7 so verändern, dass die Strahlung 2 in einer Bearbeitungszone 10 das einzustellende zweite Strahlparameterprodukt (BPP2) aufweist. Durch die Erzeugung und betragsmäßige Vergrößerung einer (negativen) Aberration wird das Strahlparameterprodukt (BPP2) angepasst. Beispielsweise wird der Abstand des ersten optischen Elements 6 und des zweiten optischen Elements 7 zueinander vergrößert, um das Stahlparameterprodukt BPP2 zu erhöhen, und verkleinert, um das Strahlparameterprodukt PBB2 zu verringern.

Eine Bearbeitungszone 10 ist als diejenige Zone definiert, in der die Lasermaterialbearbeitung (beispielsweise Schneiden, Abtragen, Bohren, Ritzen, Perforieren oder Tiefschweißen) räumlich stattfindet.

Weiterhin sind in Figur 1 eine Bearbeitungstiefe BT an dem Werkstück 9 sowie eine Wechselwirkungsfläche 14, d. h. ein Bereich, in dem die Strahlung 2 mit dem Werkstück 9 in Wechselwirkung tritt, angegeben, wobei in dem gezeigten Beispiel die Bearbeitungstiefe BT der Dicke des zu bearbeitenden Werkstücks 9 entspricht.

Sowohl das erste optische Element 6 als auch das zweite optische Element 7 der Strahlformungsoptik 5 können über eine Stelleinrichtung 15, die über ein Steuerungsmodul 16 angesteuert wird, in Richtung der Strahlachse 3 verschoben werden, wie dies jeweils durch einen Doppelpfeil 19 angedeutet ist. Durch diese Verschiebbarkeit können der Abstand des ersten optischen Elements 6 und des zweiten optischen Elements 7 zueinander und der Abstand des ersten oder zweiten optischen Elements 6 oder 7 zu der Strahlquelle 1 verändert werden. Die Art und das Ausmaß der Verstellung beeinflussen das Strahlparameterprodukt BPP2, die F-Zahl der fokussierten Strahlung 2 und deren Taillenabstand 12.

In den verschiedenen Ausführungsformen ist die Strahlformungsoptik 5 mit einer unterbrochenen Linie umrandet und variiert in der Größe in den verschiedenen Ausführungsformen, die in den Figuren 1 bis 4 gezeigt sind. Mit der jeweiligen Größe in Richtung der Strahlachse 3 ist angedeutet, in welchem Bereich die optischen Elemente, die der Strahlformungsoptik 5 zugeordnet sind, d. h. zumindest das erste optische Element 6 und das zweite optische Element 7, in Richtung der Strahlachse 3 verschoben werden können, wie dies auch durch die Doppelpfeile 19 angedeutet ist, die allerdings nur in Figur 1 gezeigt sind. Maßgeblich für die Festlegung des Taillenabstands 12 ist die Position der Referenzebene 13, die, wie vorstehend bereits erwähnt, beliebig, aber gleichbleibend, festgelegt ist, indem sie auf einer Ebene der Strahlformungsoptik senkrecht zur Strahlachse liegt und in den einzelnen Figuren als diejenige Ebene dargestellt ist, in Bezug auf die der Taillenabstand angegeben ist.

Vorzugsweise wird der Taillenabstand 12 der Strahltaille 11 der fokussierten Strahlung 2 zu der Referenzebene 13 der Strahlformungsoptik 5 so eingestellt, dass der Taillenabstand der Strahltaille 11 der fokussierten Strahlung 2 zu der Referenzebene 13 der Strahlformungsoptik 5 bei einer Variation des zweiten Strahlparameterprodukts BPP2 konstant ist oder in vorgegebenen Schranken variiert, wie dies nachfolgend anhand der Figur 2 noch näher erläutert wird.

Das Steuerungsmodul 16 kann auf eine gespeicherte Kennlinie oder ein gespeichertes Kennlinienfeld 17 zurückgreifen. Über eine solche Kennlinie oder ein solches Kennlinienfeld 17 kann auf Daten zurückgegriffen werden, die die Beziehung zwischen Kennwerten der fokussierten Strahlung (BPP2, F-Zahl, Taillenradius ($r_F$)) und der Position oder dem Wert einer optischen Eigenschaft der Elemente der Strahlformungsoptik angeben und für die Einstellung des zweiten Strahlparameterprodukts (BPP2) in Abhängigkeit eines geforderten Bearbeitungsergebnisses oder mindestens eines eingestellten oder sich einstellenden Prozessparameters herangezogen werden.

Durch das Steuerungsmodul 16 der Stelleinrichtung 15 kann das zweite Strahlparameterprodukt BPP2 auch abhängig von der Bearbeitungszeit (zeitabhängig) und/oder abhängig von der Bearbeitungsposition (ortsabhängig) entsprechend einer vorbestimmten Kennlinie oder eines vorbestimmten Kennlinienfeldes 17 verändert werden.

Falls eine zeitabhängige Änderung des zweiten Strahlparameterprodukts BPP2 erfolgen soll, wird die Position oder die optische Eigenschaft mindestens eines optischen Elements entsprechend des geforderten Bearbeitungsergebnisses oder in Abhängigkeit eines sich eingestellten oder sich einstellenden Prozessparameters variiert oder zeitlich angepasst.

Eine ortsabhängige Änderung des zweiten Strahlparameterprodukts BPP2 ist dann vorzunehmen, wenn die Materialbearbeitung beispielsweise auf stark gekrümmten Bahnen erfolgt oder eine lokale Anpassung der Prozessparameter beispielweise durch lokal variierender Materialeigenschaften oder variierender Bearbeitungstiefe erforderlich sind, während eine zeitabhängige Änderung des zweiten Strahlparameterprodukts BPP2 für die Fälle zu verwenden ist, bei denen während einer Bearbeitung transiente Vorgänge wie die Erwärmung des Werkstücks oder der Optik berücksichtigt bzw. durch einen Ramping der Strahleigenschaften kompensiert werden sollen.

Durch das Steuerungsmodul 16 der Stelleinrichtung 15 kann das zweite Strahlparameterprodukt BPP2 in Abhängigkeit einer geforderten Bearbeitungstiefe BT entsprechend der vorbestimmten Kennlinie oder des vorbestimmten Kennlinienfelds 17 ab oder oberhalb einer vorbestimmten Bearbeitungsgrenztiefe BGT mit zunehmender, geforderter Bearbeitungstiefe BT sukzessive vergrößert werden. Die Bearbeitungsgrenztiefe BGT ist diejenige vorbestimmte Bearbeitungstiefe BT, ab der eine sukzessive Änderung des Strahlparameterprodukts BPP2 vorgenommen und an die Bearbeitungstiefe angepasst wird.

In Figur 2 ist eine Vorrichtung gemäß einer zweiten Ausführungsform der Erfindung gezeigt. Anhand der Figur 2 werden die Eigenschaften und Merkmale der Erfindung bezüglich der Veränderung des zweiten Strahlparameterprodukts BPP2 und des Taillenabstands 12 noch genauer erläutert.

Auch in der Ausführungsform der Figur 2 ist die Strahlformungsoptik 5 aus einem ersten optischen Element 6 in Form einer Meniskuslinse und einem zweiten optischen Element 7 in Form einer bikonvexen Linse zusammengesetzt. Durch den geringen Abstand der beiden optischen Elemente 6 und 7 ergibt sich eine aberrationsarme Fokussierung der austretenden Strahlung 2, so dass sich eine Strahltaille 11 der fokussierten Strahlung unter einem Taillenabstand 12 ergibt, die eine geringe Ausdehnung besitzt, wie dies anhand des Detail A gezeigt ist. In diesem Fall ist der Strahlung 2 ausgangsseitig der Strahlformungsoptik 5 ein minimales zweites Strahlparameterprodukt $BPP2_{min}$ zugeordnet, das als zweites Strahlparameterprodukt BPP2 definiert ist, bei dem das Produkt aus Strahltaillenradius ($r_F$) und Strahldivergenz einen minimalen Wert annimmt, so dass idealerweise BPP2=BPP1 gilt.

Durch eine Verkleinerung des Abstands des ersten optischen Elements 6 und der Strahlquelle 1 sowie durch die Vergrößerung des Abstands zwischen dem ersten optischen Element 6 und dem zweiten optischen Element 7 wird, wie in Figur 2 dargestellt, der Beitrag einer sphärischen Aberration erzeugt. Die aberrierten Strahlen werden durch das zweite optische Element 7 fokussiert, so dass sich in der Summe eine aufgeweitete Strahltaille 11 der fokussierten Strahlung unter einem Taillenabstand 12 ergibt, wie dies anhand des Details B gezeigt ist. Insbesondere ist im Detail B ein typischer Strahlungsverlauf bei betragsmäßig vergrößerter negativer Aberration dargestellt.

Die Figur 2 macht zudem deutlich, dass mittels der Strahlformungsoptik 5 und einer unterschiedlichen Positionierung des ersten optischen Elements 6 und des zweiten optischen Elements 7 der Taillenabstands 12 der Strahltaille 11 der fokussierten Strahlung 2 zu der festen Referenzebene 13, die der Strahlformungsoptik 5 zugeordnet ist, innerhalb vorgegebener Schranken 18, d. h. innerhalb eines Bereichs, der durch den Doppelpfeil in Figur 2 angegeben ist, variiert. Durch eine entsprechende Gestaltung der Geometrie oder der optischen Eigenschaften der optischen Komponenten kann der Bereich, der durch die vorgegebenen Schranken aufgespannt wird, verkleinert oder vergrößert werden.

Weiterhin kann durch die Gestaltung der Geometrie oder der optischen Eigenschaften der optischen Komponenten sowie durch die geeignete Positionierung entlang des Strahlengangs erreicht werden, dass das Strahlparameterprodukt der auf die Bearbeitungszone gerichteten Strahlung variabel eingestellt werden kann.

Figur 2 zeigt die zwei Extrempositionen der optischen Komponenten der Strahlformungsoptik, bei denen das minimale und maximale Strahlparameterprodukt $BPP2_{min}$ und $BPP2_{max}$ eingestellt sind. Dabei sind die Werte von $BPP_{min}$ und $BPP_{max}$ von der erfindungsgemäßen Ausführung der Strahlformungsoptik abhängig, die vorsieht, dass das mit der Stelleinrichtung 15 minimal einstellbare zweite Strahlparameterprodukt $BPP2_{min}$ nicht den Wert des ersten Strahlparameterprodukts BPP1 unterschreitet und vorzugsweise identisch oder nur wenig größer als das erste Strahlparameterprodukt BPP1 ist, und dass das mit der Stelleinrichtung 15 maximal einstellbare zweite Strahlparameterprodukt $BPP2_{max}$ mindestens das Doppelte, vorzugsweise das 5- bis 20-fache, des mit der Stelleinrichtung 15 minimal einstellbaren zweiten Strahlparameterprodukts $BPP2_{min}$ beträgt.

Für eine technisch sinnvolle Einstellung des erforderlichen bzw. zulässigen Arbeitsabstands der Strahlformungsoptik von einem vom Anwender gewünschten Bereich oder zur Vermeidung von hinsichtlich Länge und Dynamik zu aufwändigen Zusatzachsen werden die optischen Komponenten so gestaltet, dass der Taillenabstand 12 der Strahltaille 11 der fokussierten Strahlung 2 zu der festen Referenzebene 13 der Strahlformungsoptik 5 bei einer Variation des zweiten Strahlparameterprodukts BPP2 innerhalb vorgegebener Schranken variiert oder konstant gehalten wird, indem die vorgegebenen Schranken als Randbedingung bei der rechnerischen Auslegung und Optimierung der Strahlformungsoptik definiert werden.

In der Ausführungsform der Figur 2 besitzt das erste optische Element 6 eine negative Brennweite, die dazu führt, dass die Strahlung aufgeweitet wird und im Zusammenspiel mit dem positiven optischen Element 7 wegen der dann leichter veränderbaren Phasenverschiebungen der Wellenfront der Strahlung Aberrationen erzeugt und verändert werden können.

Bei einer Änderung der Position entweder mindestens des ersten optischen Elements 6 oder mindestens des zweiten optischen Elements 7, d. h. bei einer Variation des Strahlparameterprodukts BPP2, kann sichergestellt werden, dass der Taillenabstand 12 innerhalb der vorgegebenen Schranken 18 verbleibt, indem die Einstellungstrajektorie für die Stellgrößen der Stelleinrichtung 15 im Kennlinienfeld 17 so abgelegt wird, dass nur Bereiche des Kennlinienfeldes eingestellt werden, bei denen der Taillenabstand 12 innerhalb der vorgegebenen Schranken 18 verbleibt.

Bei einer Variation des zweiten Strahlparameterprodukts BPP2 kann durch das Steuerungsmodul 16 der Stelleinrichtung 15 auch die F-Zahl, das bedeutet das Verhältnis aus Abstand der Strahltaille 11 zum letzten optischen Element der Stahlformungsoptik 5 am Austritt der Strahlformungsoptik 5 und dem Strahldurchmesser an diesem Element der fokussierten Strahlung 2, anhand einer vorbestimmten Kennlinie oder eines vorbestimmten Kennlinienfelds 17 eingestellt werden.

Die F-Zahl der fokussierten Strahlung 2 kann anhand der vorbestimmten Kennlinie oder des vorbestimmten Kennlinienfelds 17 so eingestellt werden, dass mit größerem zweiten Strahlparameterprodukt BPP2 die F-Zahl konstant bleibt oder vergrößert wird. Um zu erreichen, dass die Stahldivergenz konstant bleibt, wird die F-Zahl auf einem konstanten Wert gehalten, während sie verkleinert wird, um die Strahldivergenz zu erhöhen.

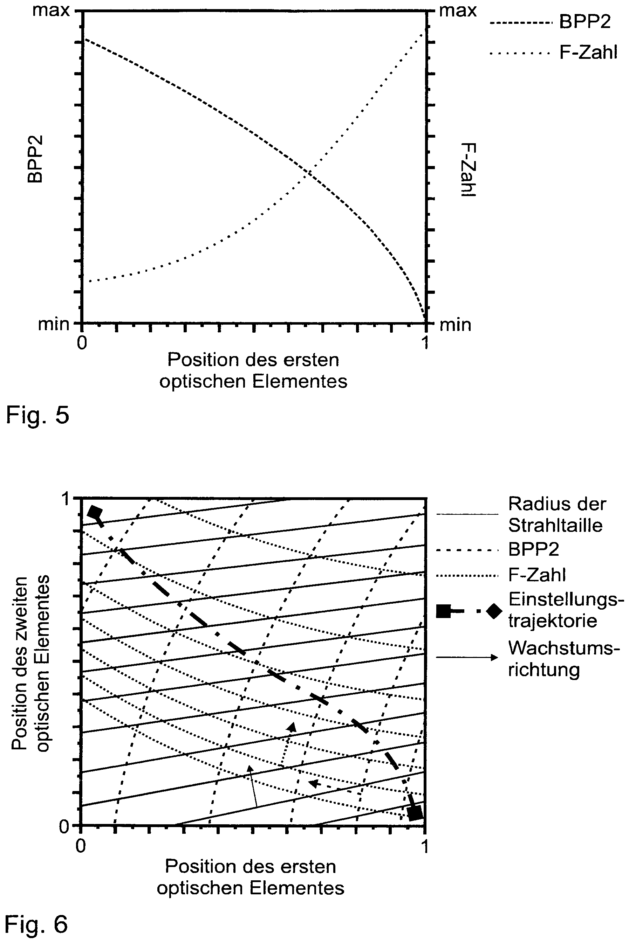

Die jeweiligen Einstellparameter und deren Abhängigkeiten voneinander werden nachfolgend noch anhand der Figuren 5 und 6 beschrieben und verdeutlicht.

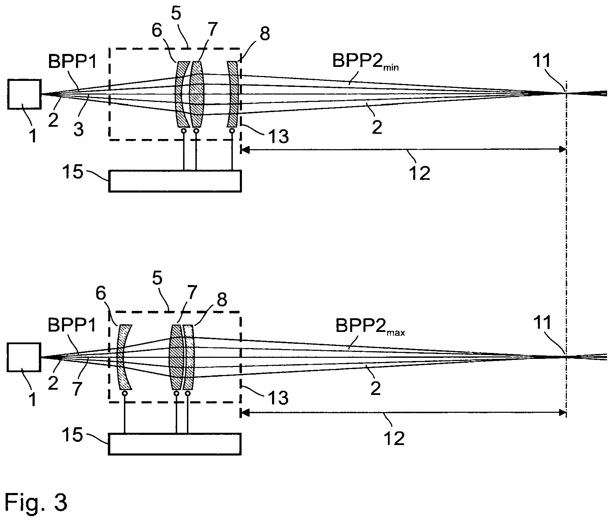

In Figur 3, die eine dritte Ausführungsform der erfindungsgemäßen Vorrichtung zeigt, weist die Strahlformungsoptik 5, zusätzlich zu dem ersten optischen Element 6 und dem zweiten optischen Element 7 ausgangsseitig des zweiten optischen Elements 7 ein drittes optisches Element 8 auf, das in seiner Position änderbar ist, was über die Stelleinrichtung 15 vorgenommen werden kann. In der Figur 3 ist das dritte optische Element 8 eine konvex-konkave Linse und ist beispielsweise nahe der Referenzebene 13 angeordnet, während das erste und das zweite optische Element 6, 7 einen geringen Abstand zueinander haben, wie die obere Darstellung in Figur 3 zeigt. Das dritte optische Element 8 der Strahlformungsoptik 5 dient dazu, die Änderung des Taillenabstands 12, die bei der Variation des Strahlparameterprodukts BPP2 durch Verschiebung des ersten und des zweiten optischen Elements 6 und 7 stattfindet, wieder auszugleichen und im Idealfall konstant zu halten. Durch die Anordnung der optischen Elemente 6, 7 und 8 innerhalb der Strahlformungsoptik 5 wird, wie auf der oberen Darstellung der Figur 3 gezeigt ist, ein minimaler Wert des Strahlparameterprodukts BPP2 eingestellt.

Wenn dagegen, wie die untere Darstellung der Figur 3 zeigt, das dritte optische Element 8 unmittelbar nach dem zweiten optischen Element 7 verschoben wird und das erste optische Element 6 unter einem größeren Abstand zu dem zweiten optischen Element 7 und gleichzeitig auch näher zu der Strahlquelle 1 angeordnet wird, wird unter demselben Taillenabstand 12 eine Strahltaille 11 mit einem maximalen zweiten Strahlparameterprodukt $BPP2_{max}$ erhalten, die eine Ausdehnung senkrecht zur Strahlachse 3 besitzt, wie dies vorstehend anhand dem Detail B in Figur 2 dargestellt ist.

Die Darstellung der Figur 3 verdeutlicht, dass durch die Strahlformungsoptik 5 der Taillenabstand 12 nicht nur in vorgegebenen Schranken 18, wie dies anhand der Figur 2 erläutert ist, variabel einstellbar ist, sondern auch konstant gehalten werden kann.

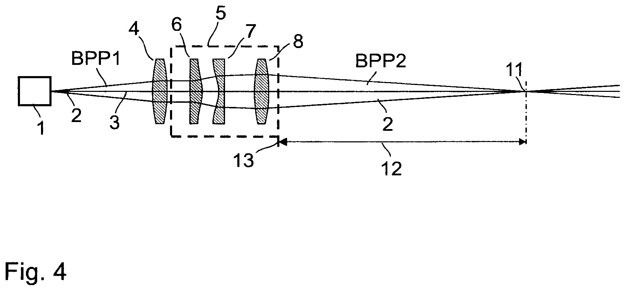

Figur 4 beschreibt ein Ausführungsbeispiel, bei dem eine Strahlkollimationsoptik 4 vor der Strahlformungsoptik 5 angeordnet ist, so dass ein kollimierte Strahl in die Strahlformungsoptik eintritt. Die Strahlformungsoptik 5 kann entsprechend den Beispielen in den Figuren 1 bis 3 ausgeführt sein oder, wie in Figur 4 dargestellt ist, mit einer oder mehreren asphärischen Linsen ausgerüstet sein.

Der Vorteil der Nutzung ashpärischer Linsen, wie in der Strahlformungsoptik 5 der Figur 4 schematisch dargestellt ist, besteht zum einen darin, dass mit optischen Elementen mit asphärischen Flächen eine höhere Variationsreichweite des Strahlparameterprodukts BPP2 erzielt werden kann im Vergleich zu einer Strahlformungsoptik mit sphärischen Linsen. Zum anderen lässt sich die Strahlformungsoptik kompakter gestalten, da, aufgrund der effizienteren Phasenfrontdeformation durch die asphärischen Flächen, die Abstände, in der die optischen Komponenten zueinander positioniert werden müssen, um die Grenzwerte des Strahlparameterprodukts zu erzeugen, geringer sind.

Wie das Strahlparameterprodukt BPP2, die F-Zahl und der Radius der Strahltaille 11 durch eine Änderung der Position des ersten und/oder des zweiten optischen Elements 6, 7 beeinflusst werden können, wird nachfolgend anhand der Figuren 5 und 6 beschrieben.

Es ist darauf hinzuweisen, dass in der Beschreibung der verschiedenen Ausführungsbeispiele, wie sie in den verschiedenen Figuren dargestellt sind, nicht alle Bauteile erneut zu einer Ausführungsform beschrieben werden, wenn sie anhand einer anderen Ausführungsform bereits beschrieben oder erläutert sind. Entsprechend kann die Beschreibung der verschiedenen Bauteile oder deren Wirkungsweise zu einer Ausführungsform auf die jeweiligen Bauteile einer anderen Ausführungsform übertragen werden, ohne dass dies ausdrücklich erwähnt wird.

Die Grafik der Figur 5 soll die Abhängigkeit des Strahlparameterprodukts BPP2 und die F-Zahl von der Position des ersten optischen Elements 6 darstellen, wobei für alle Achsen willkürliche Einheiten verwendet sind.

Die Abhängigkeit des Stahlparameterprodukts BPP2 von der Position des ersten optischen Elements 6 ist durch die Kurve in unterbrochener Linie dargestellt ist, während die Abhängigkeit der F-Zahl von der Position des ersten optischen Elements 6 durch die Kurve in punktierter Linie dargestellt ist. Die Position 0 des ersten optischen Elements 6 bezeichnet den minimal einstellbaren Abstand zum vorherigen optischen Element entlang der optischen Achse, während sich die Position 1 des ersten optischen Elements 6 auf den maximal einstellbaren Abstand zur Referenzebene 13 bezieht. Bei der Verschiebung des optischen Elements 6 ändern sich sowohl des Strahlparameterprodukt BPP2 als auch die F-Zahl des Strahls. Mit Hilfe der Kennlinie können die gewünschten Werte des Strahlparameterprodukts BPP2 oder der F-Zahl eingestellt werden, jedoch sind diese gekoppelt, so dass sie allein durch Änderung der Position des ersten optischen Elements 6 nicht unabhängig voneinander eingestellt werden.

Figur 6 zeigt nun eine Grafik, die ein Kennlinienfeld darstellt. In Abhängigkeit der Positionen des ersten optischen Elements (Abszisse) und des zweiten optischen Elements (Ordinate) sind Linien konstanter Taillenradii (durchgezogen), BPP2's (gestrichelt) und F-Zahlen (punktiert) eingetragen. Die Wachstumsrichtung der Isolinien ist durch Pfeile markiert. Im Gegensatz zu der Ausführungsform, wie sie in Figur 5 dargestellt ist, werden hier die Positionen von zwei optischen Elementen variiert, was dazu führt, dass jeweils zwei der drei Größen, beispielsweise das Strahlparameterprodukt BPP2 und die F-Zahl, soweit es die Verstellbarkeit der Strahlformungsoptik 5 zulässt, unabhängig voneinander eingestellt werden können. Für die Position 0 und die Position 1 gelten auch diejenigen Angaben und Erläuterungen vorstehend zu Figur 5.

Durch die strichpunktierte Linie ist eine Einstellungstrajektorie dargestellt. Durch die Einstellungstrajektorie werden die Stellgrößen für die Stelleinrichtung angegeben, die das Strahlparameterprodukt bzw. die F-Zahl abhängig von den Anforderungen der Bearbeitungsaufgabe (beispielsweise Art der Bearbeitung, der Bearbeitungstiefe oder Qualität) den Prozessparametern oder der Bearbeitungszeit, d. h. zeitabhängig, und/oder abhängig von der Bearbeitungsposition, d. h. ortsabhängig, verändern, wobei der Anfangspunkt nahe 0,1 mit einem Rhombus und der Endpunkt nahe 1,0 durch einen Quadrat dargestellt sind.

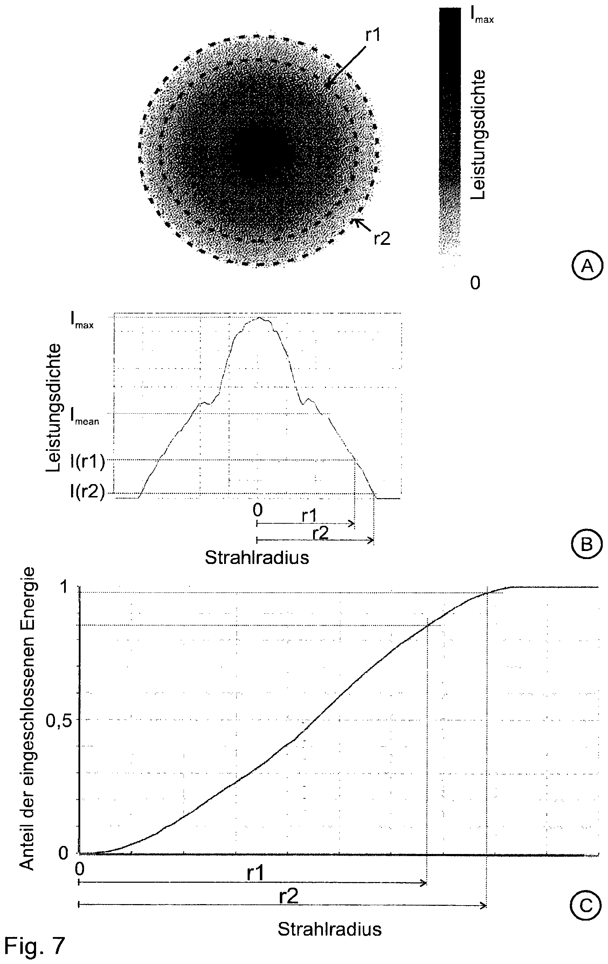

Die Figur 7 zeigt drei Grafiken A, B und C, die sich auf die Leistungsdichteverteilung der fokussierten Strahlung in einer Ebene senkrecht zur optischen Achse an einer willkürlichen Stelle in der Bearbeitungszone , beispielsweise an der Strahltaille, bei freier Propagation, ohne ein Material, beziehen.

Dabei ist der Radius r1 derjenige Radius, der mittels der zweiten Momenten-Methode definiert ist, während der Radius r2 eine Hilfsgröße ist und einem Kreis mit r>r1 zugeordnet ist, in dem nahezu der gesamte Energieanteil (mindestens 90 %, vorzugsweise zwischen 95 % und 100 %) eingeschlossen ist.

In der Grafik A ist ein Strahlquerschnitt der Strahlung 2 an der Position der Strahltaille dargestellt, wobei die über den Strahlquerschnitt gezeigten Rasterungen den entsprechenden Leistungsdichten 0 bis $I_{max}$ der Leistungsdichteskala zugeordnet sind. Die maximale Leistungsdichtet $I_{max}$ befindet sich im Zentrum des Strahlquerschnitts, d. h. im Bereich der Strahlachse 3 in Bezug auf die Darstellung der Figuren 1 bis 4 und bei der Strahlradiuskoordinate 0, während die Leistungsdichte mit zunehmender Strahlradiuskoordinate in Richtung r1 bzw. r2 abnimmt (von einer dunklen, dichten Rasterung zu einer hellen, weniger dichten Rasterung hin).

Dies wird auch anhand der Grafik B verdeutlicht, die die Leistungsdichteverteilung abhängig von der Strahlradiuskoordinate darstellt. Dabei wird der Bezug der beiden Radien r1 und r2 zu einer Leistungsdichte I(r1) und einer Leistungsdichte I(r2) veranschaulicht. Zusätzlich werden in der Grafik B die Lage der maximalen Leistungsdichte $I_{max}$ sowie der mittleren Leistungsdichte $I_{mean}$ verdeutlicht.

Die Leistungsdichteverteilung eines erfindungsgemäßen Verfahrens ist unter anderem dadurch gekennzeichnet, dass diese auf Ebenen senkrecht zur optischen Achse, die bei Anwendung der fokussierten Strahlung 2 die Bearbeitungszone 10 durchdringen oder schneiden, bei freier Propagation, ohne ein Material 9 (Werkstück) im Strahlengang, jeweils durch eine maximale Leistungsdichte $I_{max}$ definiert wird, die kleiner als der 5-fache Wert, vorzugsweise kleiner als der 2-fache bis 3-fache Wert, der mittleren Leistungsdichte $I_{mean}$ in der jeweiligen Ebene senkrecht zur Strahlachse auf derjenigen Fläche ist, die von einem Kreis mit dem nach der zweiten Momenten-Methode definierten Radius r1 eingeschlossen ist.

In der Grafik C der Figur 7 ist der Anteil der eingeschlossenen Energie, der pro Zeit dem Anteil der eingeschlossenen Leistung entspricht, in Einheiten von 0 bis 1 in Abhängigkeit der Strahlradiuskoordinate und speziell für den Strahlradius r1 und den Strahlradius r2 in willkürlichen Einheiten gezeigt. Der Anteil der eingeschlossenen Energie bzw. Leistung innerhalb der Radien r1 und r2 ist mit punktierten Linien gekennzeichnet. Die Leistungsdichteverteilung eines erfindungsgemäßen Verfahrens ist weiterhin dadurch gekennzeichnet, dass diese auf Ebenen senkrecht zur optischen Achse, die bei Anwendung der fokussierten Strahlung 2 die Bearbeitungszone 10 durchdringen oder schneiden, bei freier Propagation, ohne ein Material 9 (Werkstück) im Strahlengang, jeweils durch einen nach der zweiten Momenten-Methode definierten ersten Radius r1 definiert werden und jeweils einen zweiten Radius r2 aufweisen, wobei innerhalb eines Kreises mit dem zweiten Radius r2 mindestens 90 %, vorzugsweise mindestens 95 %, und noch bevorzugter zwischen 99 % und 100 %, der Laserstrahlleistung eingeschlossen sind, wobei der zweite Radius r2 auf maximal den 1,5-fachen Wert und bevorzugt zwischen dem 1,1-fachen und dem 1,3-fachen Wert des ersten Radius r1 eingestellt wird.

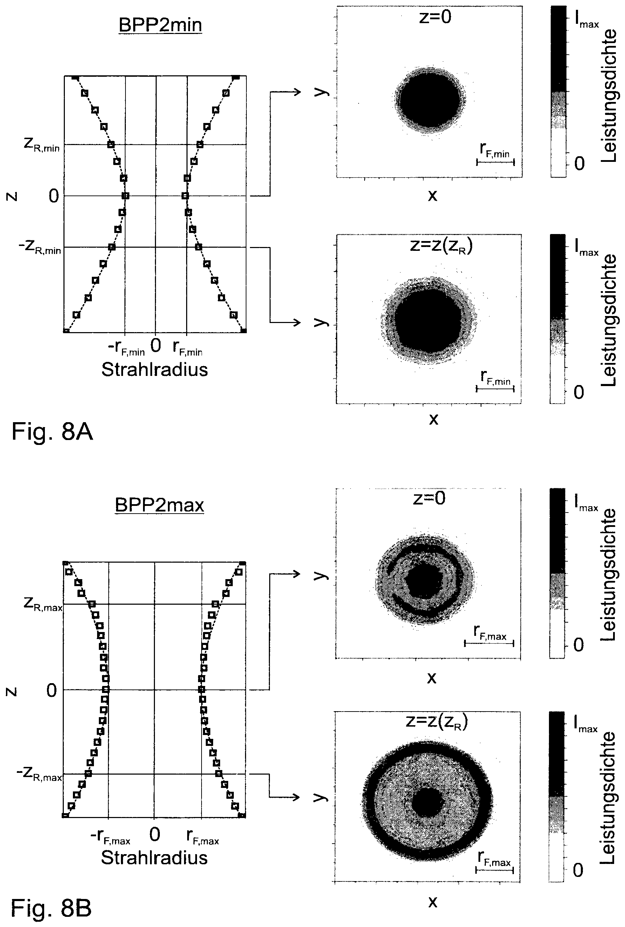

Die Figuren 8A und 8B zeigen reale Stahlvermessungen. Dargestellt ist das Ergebnis einer Diagnose des Laserstrahlprofils bei einer Einstellung der Strahlformungsoptik 5 für $BPP_{min}$ und $BPP_{max}$. Bei der Messung wird die Leistungsdichteverteilung des Strahls in mehreren Ebenen entlang der Strahlachse 3, definiert als die z-Achse, in einem Messbereich um die Strahltaille 11 aufgenommen.

Anhand der Leistungsdichteverteilung wird der Strahlradius r nach der zweiten Momenten-Methode bestimmt. Durch die Auftragung der Strahlradien entlang der z-Achse lässt sich die Strahlkaustik rekonstruieren. Diese ist auf der linken Figurenseite in den jeweiligen Grafiken der Figuren 8A und 8B dargestellt, und zwar für eine Einstellung der Strahlformungsoptik 5 für $BPP_{min}$ (Figur 8A) sowie für $BPP_{max}$ (Figur 8B). Auf der jeweiligen Strahlradiusachse ist der Radius der Strahltaille ($r_F$) gesondert gekennzeichnet. Auf der rechten Seite der jeweiligen Figuren sind zwei Leistungsdichteverteilungen an zwei charakteristischen Messpositionen dargestellt; zum einen auf der Strahltaille 11 (z=0) und zum anderen an einer Rayleighlänge ($z=z(z_R)$) nach der Strahltaille 11. Rayleighlänge ($z_R$) ist definiert als der Abstand von der Strahltaille in Ausbreitungsrichtung, in dem sich der Strahlradius um den Faktor $2^{1/2}$ vergrößert hat. Mit der x- und der y-Achse sind die lateralen Ausdehnungen der Messebene in x- und y-Richtung senkrecht zu der z-Achse (Strahlachse 3) angegeben. Der Darstellungsmaßstab ist durch den Strahltaillenradius $r_F$ festgelegt. Die Rasterskala gibt die relativ zur Strahlachse 3 positionsabhängig gemessene normierte Leistungsdichte an. Für alle Koordinatenachsen sind willkürliche Einheiten verwendet. Zusätzlich weisen die Pfeile, die die Kaustik mit den Leistungsdichteverteilungen verbinden, die zugehörigen Positionen der Messebenen auf der Strahlachse z aus.

**Patentansprüche**

1. Vorrichtung zur Materialbearbeitung mit mindestens einer Strahlquelle (1) elektromagnetischer Strahlung, die Strahlung (2) mit einer definierten Leistungsdichteverteilung emittiert, und einer die Strahlung (2) der Strahlquelle (1) variabel formenden und fokussierenden Strahlformungsoptik (5), wobei die optische Achse der fokussierten Strahlung (2), als Strahlachse (3) bezeichnet, auf eine Bearbeitungszone (10) gerichtet ist, und mit Einrichtungen, die die Strahlung (2) im Bereich der sich in der Bearbeitungszone (10) ausbildenden und bewegenden Wechselwirkungsfläche (14) von Strahlung (2) und Material (9) hält, wobei die emittierte Strahlung (2) ein erstes Strahlparameterprodukt (BPP1), d.h. beam parameter product, aufweist und wobei die Strahlung (2) in der Bearbeitungszone (10), in der die Strahlung (2) mit dem Material (9) in Wechselwirkung steht, ein zweites Strahlparameterprodukt (BPP2) aufweist, **dadurch gekennzeichnet, dass** eine Stelleinrichtung (15) vorgesehen ist, die das zweite Strahlparameterprodukt (BPP2) durch Änderung der Position oder der optischen Eigenschaften mindestens eines optischen Elements (6; 7) variiert, wobei mindestens ein erstes optisches Element (6) der Strahlformungsoptik (5) den Betrag einer Aberration erzeugt und/oder vergrößert und mindestens ein zweites optisches Element (7) der Strahlformungsoptik (5) die betragsmäßig erzeugte oder vergrößerte Aberration durch die Einstellung der Stelleinrichtung (15) durch Änderung der Position oder der optischen Eigenschaften mindestens des ersten (6) oder des zweiten optischen Elements (7) so verändert, dass die Strahlung (2) in der Bearbeitungszone (10) das einzustellende zweite Strahlparameterprodukt (BPP2) aufweist.

2. Vorrichtung nach Anspruch 1, **dadurch gekennzeichnet, dass** das mindestens eine erste optische Element (6) der Strahlformungsoptik (5) den Betrag einer negativen Aberration erzeugt oder vergrößert und das mindestens eine zweite optische Element (7) der Strahlformungsoptik (5) die betragsmäßig erzeugte oder vergrößerte negative Aberration durch die Einstellung der Stelleinrichtung (15) durch Änderung der Position oder der optischen Eigenschaften mindestens des ersten (6) oder des zweiten optischen Elements (7) so verändert, dass die Strahlung (2) in der Bearbeitungszone (10) das einzustellende zweite Strahlparameterprodukt (BPP2) aufweist.

3. Vorrichtung nach Anspruch 1 oder 2, **dadurch gekennzeichnet, dass** das mit der Stelleinrichtung (15) minimal einstellbare zweite Strahlparameterprodukt ($BPP2_{min}$) nicht den Wert des ersten Strahlparameterprodukts (BPP1) unterschreitet und vorzugsweise identisch oder nur wenig größer als das erste Strahlparameterprodukt (BPP1) ist und dass das mit der Stelleinrichtung (15) maximal einstellbare zweite Strahlparameterprodukt ($BPP2_{max}$) mindestens das Doppelte, vorzugsweise das 5- bis 20-fache, des mit der Stelleinrichtung (15) minimal einstellbaren zweiten Strahlparameterprodukts ($BPP2_{min}$) beträgt.

4. Vorrichtung nach einem der Ansprüche 1 bis 3, **dadurch gekennzeichnet, dass** die Strahlformungsoptik (5), in Propagationsrichtung der Strahlung (2) gesehen, ausgangsseitig einer Strahlkollimationsoptik (4) angeordnet ist.

5. Vorrichtung nach einem der Ansprüche 1 bis 3, **dadurch gekennzeichnet, dass** die in die Strahlformungsoptik (5) mit dem ersten Strahlparameterprodukt (BPP1) eintretende Strahlung eine nicht kollimierte Strahlung ist.

6. Vorrichtung nach einem der Ansprüche 1 bis 5, **dadurch gekennzeichnet, dass** ein Taillenabstand (12) einer Strahltaille (11) der fokussierten Strahlung (2) zu einer festen Referenzebene (13) der Strahlformungsoptik (5) bei einer Variation des zweiten Strahlparameterprodukts (BPP2) konstant ist oder in vorgegebenen Schranken (18) variiert.

7. Vorrichtung nach Anspruch 6, **dadurch gekennzeichnet, dass** bei einer Variation des zweiten Strahlparameterprodukts (BPP2) bei einem variierenden Taillenabstand (12) der Strahltaille (11) der fokussierten Strahlung (2) zu einer festen Referenzebene (13) der Strahlformungsoptik (5) der Taillenabstand (12) dadurch in vorgegebenen Schranken (19) variiert, indem mindestens das erste (6) und das zweite optische Element (7) so ausgelegt sind, dass wenigstens bei Änderung der Position oder der optischen Eigenschaften mindestens eines des ersten (6) oder des zweiten optischen Elements (7) der Taillenabstand (12) innerhalb der vorgegebenen Schranken (18) verbleibt.

8. Vorrichtung nach Anspruch 6 oder 7, **dadurch gekennzeichnet, dass** die Strahlformungsoptik (5) ein drittes optisches Element (8) aufweist, das in seiner Position oder seinen optischen Eigenschaften änderbar ist, so dass der Taillenabstand (12) in den vorgegebenen Schranken (18) variabel einstellbar oder konstant ist.

9. Vorrichtung nach einem der Ansprüche 1 bis 8, **dadurch gekennzeichnet, dass** das mindestens eine erste (6) und/oder das mindestens eine zweite optische Element (7) der Strahlformungsoptik (5) sphärische Flächen aufweisen/aufweist.

10. Vorrichtung nach einem der Ansprüche 1 bis 9, **dadurch gekennzeichnet, dass** das mindestens eine erste (6) und/oder das mindestens eine zweite optische Element (7) der Strahlformungsoptik (5) asphärische Flächen aufweisen/aufweist.

11. Vorrichtung nach einem der Ansprüche 1 bis 10, **dadurch gekennzeichnet, dass** die optischen Eigenschaften des mindestens einen ersten optischen Elements (6) und/oder des mindestens einen zweiten optischen Elements (7) durch Änderung deren/dessen Brechungsindex, deren/dessen Brechungsindexgradienten oder deren/dessen Form variierbar sind.

12. Vorrichtung nach einem der Ansprüche 1 bis 11, **dadurch gekennzeichnet, dass** das mindestens eine erste optische Element (6) und/oder das mindestens eine zweite optische Element (7) eine negative optische Brennweite besitzen/besitzt.

13. Vorrichtung nach einem der Ansprüche 1 bis 12, **dadurch gekennzeichnet, dass** durch ein Steuerungsmodul (16) der Stelleinrichtung (15) das zweite Strahlparameterprodukt (BPP2) in Abhängigkeit eines geforderten Bearbeitungsergebnisses oder mindestens eines eingestellten oder sich einstellenden Prozessparameters entsprechend einer vorbestimmten Kennlinie oder eines vorbestimmten Kennlinienfelds (17) einstellbar ist.

14. Vorrichtung nach Anspruch 13, **dadurch gekennzeichnet, dass** durch das Steuerungsmodul (16) der Stelleinrichtung (15) das zweite Strahlparameterprodukt (BPP2) abhängig von der Bearbeitungszeit (zeitabhängig) und/oder abhängig von der Bearbeitungsposition (ortsabhängig) entsprechend einer vorbestimmten Kennlinie oder eines vorbestimmten Kennlinienfeldes (17) veränderbar ist.

15. Vorrichtung nach einem der Ansprüche 6 bis 14, **dadurch gekennzeichnet, dass** bei Änderung der Position oder der optischen Eigenschaften mindestens eines des ersten (6) oder des zweiten optischen Elements (7) entlang einer vorbestimmten Kennlinie oder in einem vorbestimmten Kennlinienfeld (17) der Taillenabstand (12) innerhalb der vorgegebenen Schranken (18) verbleibt.

16. Verfahren zur Materialbearbeitung das mindestens eine Strahlquelle elektromagnetischer Strahlung, insbesondere eine Laserstrahlquelle (1) einsetzt, wobei die Strahlquelle die Strahlung (2), die ein erstes Strahlparameterprodukt (BPP1), d.h. beam parameter product, aufweist, mit einer definierten Leistungsdichteverteilung emittiert und die Strahlung (2) der Strahlquelle (1) variabel durch eine Strahlformungsoptik (5) geformt und fokussiert wird, wobei die optische Achse der fokussierten Strahlung (2), als Strahlachse (3) bezeichnet, auf eine Bearbeitungszone (10) gerichtet wird, und die Strahlung (2) im Bereich der sich in der Bearbeitungszone (10) ausbildenden und bewegenden Wechselwirkungsfläche (14) von Strahlung (2) und Material (9) gehalten wird, wobei die Strahlung in der Bearbeitungszone (10), in der die Strahlung (2) mit dem Material (9) in Wechselwirkung steht, ein zweites Strahlparameterprodukt (BPP2) aufweist, **dadurch gekennzeichnet, dass** das zweite Strahlparameterprodukt (BPP2) durch Änderung der Position oder der optischen Eigenschaften mindestens eines optischen Elements (6; 7) variiert wird, dass mit mindestens einem ersten optischen Element (6) der Strahlformungsoptik (5) der Betrag einer Aberration erzeugt oder vergrößert und mit mindestens einem zweiten optischen Element (7) der Strahlformungsoptik (5) die betragsmäßig erzeugte oder vergrößerte Aberration durch die Einstellung der Stelleinrichtung (15) verändert wird, indem die Position oder die optischen Eigenschaften mindestens des ersten (6) oder des zweiten optischen Elements (7) so geändert wird, dass die Strahlung (2) in der Bearbeitungszone (10) das einzustellende zweite Strahlparameterprodukt (BPP2) aufweist.

17. Verfahren nach Anspruch 16, **dadurch gekennzeichnet, dass** mit dem mindestens einen ersten optischen Element (6) der Betrag einer negativen Aberration erzeugt oder vergrößert wird und dass mit dem mindestens einen zweiten optischen Element (7) die betragsmäßig erzeugte oder vergrößerte negative Aberration durch Änderung der Position oder der optischen Eigenschaften mindestens des ersten (6) oder zweiten optischen Elements (7) so verändert wird, dass die Strahlung (2) in der Bearbeitungszone (10) das einzustellende zweite Strahlparameterprodukt (BPP2) aufweist.

18. Verfahren nach Anspruch 16 oder 17, **dadurch gekennzeichnet, dass** das zweite Strahlparameterprodukt (BPP2) in Abhängigkeit eines geforderten Bearbeitungsergebnisses oder mindestens eines eingestellten oder sich einstellenden Prozessparameters entsprechend einer vorbestimmten Kennlinie oder eines vorbestimmten Kennlinienfelds (17) eingestellt wird.

19. Verfahren nach einem der Ansprüche 16 bis 18, **dadurch gekennzeichnet, dass** Leistungsdichteverteilungen der fokussierten Strahlung (2) in Ebenen senkrecht zur optischen Achse, die bei Anwendung der fokussierten Strahlung (2) die Bearbeitungszone (10) durchdringen oder schneiden, bei freier Propagation, ohne ein Material (9) (Werkstück) im Strahlengang, jeweils durch einen nach der zweiten Momenten-Methode definierten ersten Radius r1 definiert werden und jeweils einen zweiten Radius r2 aufweisen, wobei innerhalb eines Kreises mit dem zweiten Radius r2 mindestens 90 %, vorzugsweise 95 %, und noch bevorzugter zwischen 99 % und 100 %, der Laserstrahlleistung eingeschlossen sind, wobei der zweite Radius r2 auf maximal den 1,5-fachen Wert und bevorzugt zwischen dem 1,1-fachen und dem 1,3-fachen Wert des ersten Radius r1 eingestellt wird.

20. Verfahren nach einem der Ansprüche 16 bis 19, **dadurch gekennzeichnet, dass** Leistungsdichteverteilungen der fokussierten Strahlung (2), in Ebenen senkrecht zur optischen Achse, die bei Anwendung der fokussierten Strahlung (2) die Bearbeitungszone (10) durchdringen oder schneiden, bei freier Propagation, ohne ein Material (9) (Werkstück) im Strahlengang, jeweils durch eine maximale Leistungsdichte ($I_{max}$) definiert werden, die kleiner als der 5-fache Wert, vorzugweise kleiner als der 2-fache bis 3-fache Wert, der mittleren Leistungsdichte ($I_{mean}$) in der jeweiligen Ebene senkrecht zur Strahlachse auf derjenigen Fläche ist, die von einem Kreis mit dem nach der zweiten Momenten-Methode definierten Radius r1 eingeschlossen ist.

21. Verfahren nach einem der Ansprüche 16 bis 20, **dadurch gekennzeichnet, dass** durch ein Steuerungsmodul (16) einer Stelleinrichtung (15) das zweite Strahlparameterprodukt (BPP2) in Abhängigkeit einer geforderten Bearbeitungstiefe (BT) entsprechend einer vorbestimmten Kennlinie oder eines vorbestimmten Kennlinienfelds (17) ab oder oberhalb einer vorbestimmten Bearbeitungsgrenztiefe (BGT) mit zunehmender, geforderter Bearbeitungstiefe (BT) sukzessive vergrößert wird.

22. Verfahren nach einem der Ansprüche 16 bis 21, **dadurch gekennzeichnet, dass** durch das Steuerungsmodul (16) der Stelleinrichtung (15) bei einer Variation des zweiten Strahlparameterprodukts (BPP2) auch die F-Zahl (Verhältnis aus Abstand der Strahltaille (11) zum letzten optischen Element am Austritt der Strahlformungsoptik und dem Strahldurchmesser auf diesem Element) der fokussierten Strahlung (2) anhand einer vorbestimmten Kennlinie oder eines vorbestimmten Kennlinienfelds (17) eingestellt wird.

23. Verfahren nach Anspruch 22, **dadurch gekennzeichnet, dass** die F-Zahl (Blendenzahl) der fokussierten Strahlung (2) anhand der vorbestimmten Kennlinie oder des vorbestimmten Kennlinienfelds (17) so eingestellt wird, dass mit größerem zweiten Strahlparameterprodukt (BPP2) die F-Zahl konstant bleibt oder vergrößert wird.

**Claims**

1. An apparatus for material processing, comprising at least one beam source (1) of electromagnetic radiation that emits radiation (2) with a defined power density distribution, and a beam-shaping optics (5) variable shaping and focusing the radiation (2) of the beam source (1), wherein the optical axis of the focused radiation (2), referred to as beam axis (3), is directed onto a processing zone (10), and means for holding the radiation (2) in a region of an interaction surface (14) of radiation (2) and material (9), that interaction surface (14) being formed and moving in the processing zone (10), wherein the emitted radiation (2) comprises a first beam parameter product (BPP1), i.e.

beam parameter product, and wherein the radiation (2) has a second beam parameter product (BPP2) in the processing zone (10) in which the radiation (2) interacts with the material (9), **characterized in that** an adjusting device (15) is provided which varies the second beam parameter product (BPP2) by changing the position or the optical properties of at least one optical element (6; 7), wherein at least one first optical element (6) of the beam shaping optics (5) generates and/or increases the amount of an aberration and at least one second optical element (7) of the beam shaping optics (5) changes the amount of the generated or increased aberration by the adjustment of the adjusting device (15) by changing the position or the optical properties of at least the first (6) or the second optical element (7) in such a way that the radiation (2) in the processing zone (10) has the second beam parameter product (BPP2) to be adjusted.

2. Device according to claim 1, **characterized in that** the at least one first optical element (6) of the beam shaping optics (5) generates or increases the amount of a negative aberration and the at least one second optical element (7) of the beam shaping optics (5) changes the amount of the generated or increased negative aberration by the adjustment of the adjusting device (15) by changing the position or the optical properties of at least the first (6) or the second optical element (7) in such a way, that the radiation (2) in the processing zone (10) has the second beam parameter product (BPP2) to be set.

3. Device according to claim 1 or 2, **characterized in that** the minimum adjustable second beam parameter product (BPP2$_{min}$) with the adjusting device (15) does not fall below the value of the first beam parameter product (BPP1) and is preferably identical or only slightly larger than the first beam parameter product (BPP1) and that the maximum adjustable second beam parameter product (BPP2$_{max}$) with the adjusting device (15) is at least twice the value of the first beam parameter product (BPP1), preferably 5 to 20 times the minimum second beam parameter product (BPP2$_{min}$) which can be set with the setting device (15).

4. Device according to one of claims 1 to 3, **characterized in that** the beam shaping optics (5), viewed in the propagation direction of the radiation (2), is arranged on the output side of a beam collimation optics (4).

5. Device according to any one of claims 1 to 3, **characterized in that** the radiation entering the beam shaping optics (5) with the first beam parameter product (BPP1) is a non-collimated radiation.

6. Device according to any one of claims 1 to 5, **characterized in that** a waist distance (12) of a beam waist (11) of the focused radiation (2) to a fixed reference plane (13) of the beam shaping optics (5) is constant with a variation of the second beam parameter product (BPP2) or varies within predetermined bounds (18).

7. Device according to claim 6, **characterized in that**, in the case of a variation of the second beam parameter product (BPP2) with a varying waist distance (12) of the beam waist (11) of the focused radiation (2) to a fixed reference plane (13) of the beam shaping optics (5), the waist distance (12) thereby varies within predetermined bounds (19), **in that** at least the first (6) and the second optical element (7) are designed in such a way that, at least when the position or the optical properties of at least one of the first (6) or the second optical element (7) are changed, the waist distance (12) remains within the predetermined bounds (18).

8. Device according to claim 6 or 7, **characterized in that** the beam shaping optics (5) comprises a third optical element (8), which is changeable in its position or its optical properties, so that the waist distance (12) is variably adjustable or constant within the predetermined barriers (18).

9. Device according to one of the claims 1 to 8, **characterized in that** the at least one first (6) and/or the at least one second optical element (7) of the beam shaping optics (5) have/has spherical surfaces.

10. Device according to one of the claims 1 to 9, **characterized in that** the at least one first optical element (6) and/or the at least one second optical element (7) of the beam shaping optics (5) have/has aspherical surfaces.

11. Device according to any one of claims 1 to 10, **characterized in that** the optical properties of the at least one first optical element (6) and/or the at least one second optical element (7) are variable by changing their refractive index, their refractive index gradient or their shape.

12. Device according to any one of claims 1 to 11, **characterized in that** the at least one first optical element (6) and/or the at least one second optical element (7) have/has a negative optical focal length.

13. Device according to one of the claims 1 to 12, **characterized in that** the second beam parameter product (BPP2) can be set by a control module (16) of the setting device (15) as a function of a required processing result or at least one set or setting process parameter according to a predetermined characteristic curve or a predetermined characteristic curve field (17).

14. Device according to claim 13, **characterized in that** the second beam parameter product (BPP2) can be changed by the control module (16) of the setting device (15) depending on the processing time (time-dependent) and/or depending on the processing position (location-dependent) according to a predetermined characteristic curve or a predetermined characteristic curve field (17).

15. Device according to one of claims 6 to 14, **characterized in that** when the position or the optical properties of at least one of the first (6) or the second optical element (7) are changed along a predetermined characteristic curve or in a predetermined characteristic curve field (17), the waist distance (12) remains within the predetermined barriers (18).

16. Method for material processing which uses at least one beam source of electromagnetic radiation, in particular a laser beam source (1), wherein the beam source emits the radiation (2), which has a first beam parameter product (BPP1), i.e. beam parameter product, with a defined power density distribution and the radiation (2) of the beam source (1) is shaped and focused variably by beam-shaping optics (5), wherein the optical axis of the focused radiation (2), designated as beam axis (3), is directed onto a processing zone (10), and the radiation (2) in the region of the interaction surface (14) of radiation (2) forming and moving in the processing zone (10) is directed onto the processing zone (10), is directed towards a processing zone (10) and the radiation (2) is held in the region of the interaction surface (14) of radiation (2) and material (9) which forms and moves in the processing zone (10), the radiation having a second beam parameter product (BPP2) in the processing zone (10) in which the radiation (2) interacts with the material (9), **characterized in that** the second beam parameter product (BPP2) is varied by changing the position or the optical properties of at least one optical element (6; 7) is varied **in that** with at least one first optical element (6) of the beam shaping optics (5) the amount of an aberration is generated or enlarged and with at least one second optical element (7) of the beam shaping optics (5) the amount of the generated or enlarged aberration is varied by the adjustment of the adjusting device (15), by changing the position or the optical properties of at least the first (6) or the second optical element (7) in such a way that the radiation (2) in the processing zone (10) has the second beam parameter product (BPP2) to be set.

17. Method according to claim 16, **characterized in that** with the at least one first optical element (6) the amount of a negative aberration is generated or enlarged and that with the at least one second optical element (7) the amount of the generated or enlarged negative aberration is changed by changing the position or the optical properties of at least the first (6) or second optical element (7) in such a way that the radiation (2) in the processing zone (10) has the second beam parameter product (BPP2) to be set.

18. Method according to claim 16 or 17, **characterized in that** the second beam parameter product (BPP2) is adjusted in dependence on a required processing result or at least one adjusted or adjusting process parameter according to a predetermined characteristic curve or a predetermined characteristic curve field (17).

19. Method according to one of the claims 16 to 18, **characterized in that** power density distributions of the focused radiation (2) in planes perpendicular to the optical axis, which penetrate or intersect the processing zone (10) when the focused radiation (2) is used, with free propagation, without a material (9) (workpiece) in the beam path, are each defined by a first radius r1 defined according to the second method of moments and each have a second radius r2, wherein at least 90%, preferably 95%, and even more preferably between 99% and 100%, of the laser beam power is enclosed within a circle with the second radius r2, wherein the second radius r2 is set to at most 1.5 times the value and preferably between 1.1 times and 1.3 times the value of the first radius r1.

20. Method according to one of the claims 16 to 19, **characterized in that** power density distributions of the focused radiation (2), in planes perpendicular to the optical axis, which penetrate or intersect the processing zone (10) when the focused radiation (2) is used, with free propagation, without a material (9) (workpiece) in the beam path, are defined in each case by a maximum power density ($I_{max}$) which is smaller than 5 times the value, preferably smaller than 2 to 3 times the value, of the mean power density ($I_{mean}$) in the respective plane perpendicular to the beam axis on that surface which is enclosed by a circle having the radius r1 defined according to the second method of moments.

21. Method according to one of the claims 16 to 20, **characterized in that** the second beam parameter product (BPP2) is successively increased by a control module (16) of a control device (15) as a function of a required machining depth (BT) in accordance with a predetermined characteristic curve or a predetermined characteristic curve field (17) from or above a predetermined machining limit depth (BGT) with increasing required machining depth (BT).

22. Method according to one of the claims 16 to 21, **characterized in that** the F-number (ratio of the distance of the beam waist (11) to the last optical element at the exit of the beam shaping optics and the beam diameter on this element) of the focused radiation (2) is also set by the control module (16) of the setting device (15) during a variation of the second beam parameter product (BPP2) on the basis of a predetermined characteristic curve or a predetermined characteristic curve field (17).

23. Method according to claim 22, **characterized in that** the F-number (aperture number) of the focused radiation (2) is adjusted by means of the predetermined characteristic curve or the predetermined characteristic field (17) such that with larger second beam parameter product (BPP2) the F-number remains constant or is increased.


## Revendications

1. Dispositif de traitement de matériau avec au moins une source de faisceau (1) de rayonnement électromagnétique qui émet un rayonnement (2) avec une distribution de densité de puissance définie, et une optique de mise en forme de faisceau (5) qui met en forme de manière variable et focalise le rayonnement (2) de la source de faisceau (1), où l'axe optique du rayonnement focalisé (2), appelé axe de faisceau (3), est dirigé sur une zone de traitement (10), et avec des dispositifs qui maintiennent le rayonnement (2) dans le domaine de la surface d'interaction (14) du rayonnement (2) et du matériau (9) qui se forme et se déplace dans la zone de traitement (10), où le rayonnement (2) émis présente un premier produit des paramètres de faisceau (BPP1), c'est-à-dire beam parameter product, et où le rayonnement (2) dans la zone de traitement (10) dans laquelle le rayonnement (2) est en interaction avec le matériau (9), présente un second produit des paramètres de faisceau (BPP2), **caractérisé en ce qu'**il est prévu un dispositif de réglage (15) qui fait varier le second produit des paramètres de faisceau (BPP2) en modifiant la position ou les propriétés optiques d'au moins un élément optique (6; 7), où au moins un premier élément optique (6) de l'optique de mise en forme de faisceau (5) génère et/ou augmente l'amplitude d'une aberration et au moins un second élément optique (7) de l'optique de mise en forme de faisceau (5) modifie l'aberration générée ou agrandie en termes d'amplitude en ajustant le dispositif de réglage (15) en modifiant la position ou les propriétés optiques d'au moins le premier (6) ou le second élément optique (7) de sorte que le rayonnement (2) présente dans la zone de traitement (10) le second produit des paramètres de faisceau (BPP2) à ajuster.

2. Dispositif selon la revendication 1, **caractérisé en ce que** le au moins un premier élément optique (6) de l'optique de mise en forme de faisceau (5) génère ou augmente l'amplitude d'une aberration négative et le au moins un second élément optique (7) de l'optique de mise en forme de faisceau (5) modifie l'aberration négative générée ou augmentée en termes d'amplitude en ajustant le dispositif de réglage (15) en modifiant la position ou les propriétés optiques d'au moins le premier (6) ou le second élément optique (7) de sorte que le rayonnement (2) présente dans la zone de traitement (10) le second produit des paramètres de faisceau (BPP2) à ajuster.

3. Dispositif selon la revendication 1 ou 2, **caractérisé en ce que** le second produit des paramètres de faisceau qui peut être ajusté au minimum avec le dispositif de réglage (15), (BPP2$_{min}$), n'est pas situé en dessous de la valeur du premier produit des paramètres de faisceau (BPP1) et est de préférence identique ou seulement légèrement plus grand que le premier produit des paramètres de faisceau (BPP1) et **en ce que** le second produit de paramètre de faisceau qui peut être ajusté au maximum avec le dispositif de réglage (15), (BPP2$_{max}$), est au moins deux fois, de préférence 5 à 20 fois, le second produit des paramètres de faisceau qui peut être ajusté au minimum avec le dispositif de réglage (15), (BPP2$_{min}$).

4. Dispositif selon l'une des revendications 1 à 3, **caractérisé en ce que** l'optique de mise en forme de faisceau (5), vue dans le sens de propagation du rayonnement (2), est disposée du côté sortie d'une optique de collimation de faisceau (4).

5. Dispositif selon l'une des revendications 1 à 3, **caractérisé en ce que** le rayonnement entrant dans l'optique de mise en forme de faisceau (5) avec le premier produit des paramètres de faisceau (BPP1) est un rayonnement non collimaté.

**6.** Dispositif selon l'une des revendications 1 à 5, **caractérisé en ce qu'**une distance de taille (12) d'une taille de faisceau (11) du rayonnement focalisé (2) à un plan de référence fixe (13) de l'optique de mise en forme de faisceau (5) est constante ou varie dans des limites prédéterminées (18) lors d'une variation du second produit des paramètres de faisceau (BPP2).

**7.** Dispositif selon la revendication 6, **caractérisé en ce que** lors d'une variation du second produit des paramètres de faisceau (BPP2) avec une distance de taille variable (12) de la taille de faisceau (11) du rayonnement focalisé (2) à un plan de référence fixe (13) de l'optique de mise en forme de faisceau (5) la distance de taille (12) varie ainsi dans des limites prédéterminées (19) par le fait qu'au moins le premier (6) et le second élément optique (7) sont conçus de telle sorte qu'au moins lors d'une modification de la position ou des propriétés optiques d'au moins l'un du premier (6) ou du second élément optique (7), la distance de taille (12) reste dans les limites prédéterminées (18).

**8.** Dispositif selon la revendication 6 ou 7, **caractérisé en ce que** l'optique de mise en forme de faisceau (5) présente un troisième élément optique (8) qui peut être modifié dans sa position ou ses propriétés optiques, de sorte que la distance de taille (12) peut être ajustée de manière variable ou est constante dans les limites prédéterminées (18).

**9.** Dispositif selon l'une des revendications 1 à 8, **caractérisé en ce que** le au moins un premier (6) et/ou le au moins un second élément optique (7) de l'optique de mise en forme de faisceau (5) présentent/présente des surfaces sphériques.

**10.** Dispositif selon l'une des revendications 1 à 9, **caractérisé en ce que** le au moins un premier (6) et/ou le au moins un second élément optique (7) de l'optique de mise en forme de faisceau (5) présentent/présente des surfaces asphériques.

**11.** Dispositif selon l'une des revendications 1 à 10, **caractérisé en ce que** les propriétés optiques du au moins un premier élément optique (6) et/ou du au moins un second élément optique (7) peuvent être modifiées par une modification de leur/son indice de réfraction, de leur/son gradient d'indice de réfraction ou de leur/sa forme.

**12.** Dispositif selon l'une des revendications 1 à 11, **caractérisé en ce que** le au moins un premier élément optique (6) et/ou le au moins un second élément optique (7) possèdent/possède une distance focale optique négative.

**13.** Dispositif selon l'une des revendications 1 à 12, **caractérisé en ce que** le second produit des paramètres de faisceau (BPP2) peut être ajusté par un module de commande (16) du dispositif de réglage (15) en fonction d'un résultat de traitement recherché ou d'au moins un paramètre de processus ajusté ou qui s'ajuste selon une courbe caractéristique prédéterminée ou un champ de courbes caractéristiques prédéterminé (17).

**14.** Dispositif selon la revendication 13, **caractérisé en ce que** le second produit des paramètres de faisceau (BPP2) peut être modifié par le module de commande (16) du dispositif de réglage (15) en fonction du temps de traitement (en fonction du temps) et/ou en fonction de la position de traitément (en fonction de l'emplacement) selon une courbe caractéristique prédéterminée ou un champ de courbes caractéristiques prédéterminé (17).

**15.** Dispositif selon l'une des revendications 6 à 14, **caractérisé en ce que** lors d'une modification de la position ou des propriétés optiques d'au moins l'un du premier (6) ou du second élément optique (7) le long d'une courbe caractéristique prédéterminée ou dans un champ de courbes caractéristiques prédéterminé (17) la distance de taille (12) reste dans les limites prédéterminées (18).

**16.** Procédé de traitement de matériau qui utilise au moins une source de faisceau de rayonnement électromagnétique, en particulier une source de faisceau laser (1), où la source de faisceau émet le rayonnement (2), qui présente un premier produit des paramètres de faisceau (BPP1), c'est à dire beam parameter product, avec une distribution de densité de puissance définie et le rayonnement (2) de la source de faisceau (1) est mis en forme de manière variable et focalisé par une optique de mise en forme de faisceau (5), où l'axe optique du rayonnement focalisé (2), appelé axe de faisceau (3), est dirigé sur une zone de traitement (10), et le rayonnement (2) est maintenu dans le domaine de la surface d'interaction (14) du rayonnement (2) et du matériau (9) qui se forme et se déplace dans la zone de traitement (10), où le rayonnement présente dans la zone de traitement (10) dans laquelle le rayonnement (2) interagit avec le matériau (9) un second produit des paramètres de faisceau (BPP2), **caractérisé en ce que** le second produit de paramètre de faisceau (BPP2) est amené à varier par une modification de la position ou des propriétés optiques d'au moins un élément optique (6; 7), **en ce que** avec au moins un premier élément optique (6) de l'optique de mise en forme de faisceau (5) l'amplitude d'une aberration est générée ou augmentée et avec au moins un second élément optique (7) de l'optique de mise en forme de faisceau (5) l'aberration générée ou augmentée en termes d'amplitude est modifiée par l'ajustement du dispositif de réglage (15), par le fait que la position ou les propriétés optiques d'au moins le premier (6) ou le second élément optique (7) sont modifiées de sorte que le rayonnement (2) présente dans la zone de traitement (10) le second produit des paramètres de faisceau (BPP2) à ajuster.

17. Procédé selon la revendication 16, **caractérisé en ce que** l'amplitude d'une aberration négative est générée ou augmentée avec le au moins un premier élément optique (6) et **en ce que** l'aberration négative générée ou augmentée en termes d'amplitude avec le au moins un second élément optique (7) est modifiée par une modification de la position ou des propriétés optiques d'au moins le premier (6) ou second élément optique (7) de sorte que le rayonnement (2) présente dans la zone de traitement (10) le second produit des paramètres de faisceau (BPP2) à ajuster.

18. Procédé selon la revendication 16 ou 17, **caractérisé en ce que** le second produit des paramètres de faisceau (BPP2) est ajusté en fonction d'un résultat de traitement recherché ou d'au moins un paramètre de processus ajusté ou qui s'ajuste selon une courbe caractéristique prédéterminée ou un champ de courbes caractéristiques prédéterminé (17).

19. Procédé selon l'une des revendications 16 à 18, **caractérisé en ce que** des distributions de densité de puissance du rayonnement focalisé (2) dans des plans perpendiculaires à l'axe optique qui pénètrent ou coupent la zone de traitement (10) lors de l'utilisation du rayonnement focalisé (2), sont définies, lors d'une propagation libre, sans matériau (9) (pièce) dans le trajet du faisceau, dans chaque cas par un premier rayon r1 défini selon la méthode du second moment et présentent dans chaque cas un second rayon r2, où au moins 90%, de préférence 95%, et de préférence encore entre 99% et 100%, de la puissance du faisceau laser sont inclus dans un cercle avec le second rayon r2, où le second rayon r2 est ajusté au maximum à 1,5 fois la valeur et de préférence entre 1,1 et 1,3 fois la valeur du premier rayon r1.

20. Procédé selon l'une des revendications 16 à 19, **caractérisé en ce que** des distributions de densité de puissance du rayonnement focalisé (2), dans des plans perpendiculaires à l'axe optique, qui pénètrent ou coupent la zone de traitement (10) lors de l'utilisation du rayonnement focalisé (2), lors d'une propagation libre, sans matériau (9) (pièce) dans le trajet du faisceau, sont définies dans chaque cas par une densité de puissance maximale ($I_{max}$) qui est inférieure à 5 fois la valeur, de préférence inférieure à 2 à 3 fois la valeur, de la densité de puissance moyenne ($I_{mean}$) dans le plan respectif perpendiculaire à l'axe du faisceau sur la surface qui est entourée par un cercle avec le rayon r1 défini selon la méthode du second moment.

21. Procédé selon l'une des revendications 16 à 20, **caractérisé en ce que** le second produit des paramètres de faisceau (BPP2) est augmenté successivement par un module de commande (16) d'un dispositif de réglage (15) en fonction d'une profondeur de traitement recherchée (BT) selon une courbe caractéristique prédéterminée ou un champ de courbes caractéristiques prédéterminé (17) à partir de ou au-dessus d'une profondeur limite de traitement (BGT) prédéterminée avec la profondeur de traitement recherchée (BT) croissante.

22. Procédé selon l'une des revendications 16 à 21, **caractérisé en ce que** lors d'une variation du second produit des paramètres de faisceau (BPP2) également le nombre F (rapport de la distance entre la taille du faisceau (11) et le dernier élément optique à la sortie de l'optique de mise en forme de faisceau et du diamètre du faisceau sur cet élément) du rayonnement focalisé (2) est ajusté par le module de commande (16) du dispositif de réglage (15) à l'aide d'une courbe caractéristique prédéterminée ou d'un champ de courbes caractéristiques prédéterminé (17).

23. Procédé selon la revendication 22, **caractérisé en ce que** le nombre F (valeur de diaphragme) du rayonnement focalisé (2) est ajusté à l'aide de la courbe caractéristique prédéterminée ou du champ de courbes caractéristiques prédéterminé (17) de sorte qu'avec un plus grand second produit des paramètres de faisceau (BPP2) le nombre F reste constant ou est augmenté.

Fig. 1

Detail A

Detail B

Fig. 2

Fig. 3

Fig. 4

Fig. 5

Fig. 6

Fig. 7

Fig. 8A

Fig. 8B

**IN DER BESCHREIBUNG AUFGEFÜHRTE DOKUMENTE**

**In der Beschreibung aufgeführte Patentdokumente**

- EP 0723834 A1
- DE 102007024700 A1
- DE 102015101263 A1
- EP 2334465 B1
- WO 2016209800 A1
- US 020150378184 A1
- DE 102014207624 A1